# EUROPÄISCHE PATENTSCHRIFT

(11) **EP 2 189 943 B1**
(45) Veröffentlichungstag und Bekanntmachung des Hinweises auf die Patenterteilung: **24.09.2014**
(21) Anmeldenummer: 08169422.6
(22) Anmeldetag: 19.11.2008
(51) Int. Cl.: G06T 7/00, G06T 7/20

(54) **Bestimmung vital-bewegter Regionen eines Analysebildes**
Detection of vitally moved regions in an analysis image
Détermination de régions à mouvements vitaux d'une image d'analyse

(43) Veröffentlichungstag der Anmeldung: 26.05.2010
(73) Patentinhaber: Brainlab AG, 85622 Feldkirchen (DE)
(72) Erfinder: Berlinger, Kajetan, 80798 München (DE); Fürst, Armin, 85551 Kirchheim (DE)
(74) Vertreter: Schwabe - Sandmair - Marx

(56) Entgegenhaltungen:
- EP-A- 1 880 673
- LUCIA VENCES, JÖRN WULF, DIRK VORDERMARK, OTTO SAUER, KAJETAN BERLINGER, MICHAEL ROTH: "Target motion measurement without implanted markers and its validation by comparison with manually obtained data" MEDICAL PHYSICS, [Online] Bd. 32, Nr. 11, 24. Oktober 2005 (2005-10-24), Seiten 3431-3439, XP002528589 American Association of Physicists in Medicine, Wisconsin, Maryland Gefunden im Internet: URL:scitation.aip.org/getpdf/servlet/GetPD FServlet?filetype=pdf&id=MPHYA600003200001 1003431000001&idtype=cvips&prog=normal> [gefunden am 2009-05-11]
- JAMES C ROSS ET AL: "Real-Time Liver Motion Compensation for MRgFUS" MEDICAL IMAGE COMPUTING AND COMPUTER-ASSISTED INTERVENTION Â MICCAI 2008; [LECTURE NOTES IN COMPUTER SCIENCE], SPRINGER BERLIN HEIDELBERG, BERLIN, HEIDELBERG, Bd. 5242, 6. September 2008 (2008-09-06), Seiten 806-813, XP019105238 ISBN: 978-3-540-85989-5
- VOIRIN D ET AL: "Computer-aided hepatic tumour ablation: requirements and preliminary results" COMPTES RENDUS - BIOLOGIES, ELSEVIER, PARIS, FR, Bd. 325, Nr. 4, 1. April 2002 (2002-04-01), Seiten 309-319, XP004371766 ISSN: 1631-0691
- SCHWEIKARD A ET AL: "Fiducial-less respiration tracking in radiosurgery" LECTURE NOTES IN COMPUTER SCIENCE, SPRINGER VERLAG, BERLIN; DE, Bd. 3217, 1. Januar 2004 (2004-01-01), Seiten 992-999, XP009086135 ISSN: 0302-9743

## Beschreibung

Die vorliegende Erfindung betrifft die Bestimmung vital-bewegter Regionen eines Analyse-bildes.

Es wird auf die Veröffentlichung "Real-Time Liver Motion Compensation for MRgFUS" von James C. Ross, Rekha Tranquebar, und Dattesh Shanbhag hingewiesen, veröffentlicht auf der MICCAI 2008 in New York: MICCAI 2008, Part II, LNCS 5242, pp. 806-813, 2008. (Herausgeber der Proceedings: D. Metaxas et al. Springer-Verlag Berlin Heidelberg 2008).

EP 1 880 673 A1 offenbart ein Verfahren zur Quantifizierung des dynamischen Verhaltens von Organen. Verzweigungen von Blutgefäßen werden zum Tracken der Bewegung individueller Punkte innerhalb einer Vielzahl von CT-Bildem genutzt.

LUCIA VENCES, JÖRN WULF, DIRK VORDERMARK, OTTO SAUER, KAJETAN BERLINGER, MICHAEL ROTH: "Target motion measurement without implanted markers and its validation by comparison with manually obtained data" MEDICAL PHYSICS, Bd. 32, Nr. 11, 24. Oktober 2005, Seiten 3431 - 3439, XP 2528589, American Association of Physicists in Medicine, Wisconsin, Maryland offenbart die Messung der Bewegung eines Targets ohne implantierte Marker. Von einem Experten wird eine Suchregion in einem CT bestimmt. In dieser Suchregion wird nach dem Target gesucht.

JAMES C ROSS ET AL: "Real-Time Liver Motion Compensation for MrgFUS" MEDICAL IMAGE COMPUTING AND COMPUTER-ASSISTED INTERVENTION MICCAI 2008; LECTURE NOTES IN COMPUTER SCIENCE, SPRINGER BERLIN, HEIDELBERG, Bd. 5242, 6. September 2008, Seiten 806, 813, XP19105238, ISBN: 978-3-540-85989-5 offenbart die Erkennung der Verformung der Leber anhand von Blutgefäßen in der Nähe der Leber. Die Blutgefäße werden in MR-Bilder erkannt.

VOIRIN D ET AL: "Computer-aided hepatic tumour ablation: requirements and preliminary results" COMPTES RENDUS - BIOLOGIES, ELSEVIER, PARIS, FR, Bd. 325, Nr. 4, 1. April 2002, Seiten 309 - 319, XP4371766, ISSN: 1631-0691 offenbart die Erstellung von MRI-Bildem in der Ausatmungsphase. Weiter wird die Idee offenbart, basierend auf CT-Bildem die Leberbewegung zu modellieren und dann während eines chirurgischen Eingriffs vorherzusagen.

SCHWEIKARD A ET AL: "Fiducial-less respiration tracking is radiosurgery" LECTURE NOTES IN COMPUTER SCIENCE, SPRINGER VERLAG, BERLIN; DE, Bd. 3217, 1. Januar 2004, Seiten 992-999, XP9086135, ISSN: 0302-9743 offenbart die gleichzeitige Erfassung von Röntgenbildern und die Erfassung der Oberflächenbewegung durch Infrarotstrahlung und die Korrelierung der externen Bewegung mit der internen Bewegung.

Die unabhängigen Ansprüche beschreiben die Gegenstände der Erfindung. Die abhängigen Ansprüche sind auf vorteilhafte Ausführungsformen gerichtet.

Vorteilhaft ermöglichen die Gegenstände der Erfindung die Bestimmung einer Lage eines zu bestrahlenden, vital-bewegten Körperelements.

Die Lage eines vital-bewegten Körperelements wird hierin entweder durch die (zweidimensionale) Lage einer Region in einem Analysebild beschrieben oder sie wird durch eine (dreidimensionale) Lage in einem Bezugssystem (z.B. Bezugssystem des Behandlungsraums) basierend auf der Lage der Region in dem Analysebild bestimmt. Allgemein umfasst der Begriff "Lage" hierin eine zweidimensionale Bedeutung und bezieht sich auf ein Analysebild und umfasst dreidimensionale Bedeutung und bezieht sich auf ein Bezugssystem. Die Region stellt ein vital-bewegtes Körperelement dar. Vorteilhaft ermöglicht die bestimmte Lage die Berücksichtigung einer durch die Vitalbewegung verursachten Lageänderung der vital-bewegten Körperelemente durch Steuerung eines Behandlungsstrahls. In dieser Anmeldung wird das Analysebild beispielhaft als zweidimensional beschrieben. Ein dreidimensionales Analysebild soll aber auch umfasst sein. In diesem Fall hätte dann die Region eine dreidimensionale Lage.

Vital-bewegte Regionen eines Analysebildes sind Regionen, die ein vital-bewegtes Element eines anatomischen Körpers darstellen. Der Begriff "vital-bewegt" bedeutet, dass die Körperelemente aufgrund von Vitalfunktionen des Körpers, wie beilspielsweise Atmung und/oder Herzschlag bewegt werden. Diese Funktionen des Körpers sind lebenserhaltend. Die dadurch erzeugten Bewegungen von Teilen des Körpers, wie beispielsweise Rippen oder Weichteile können bei der Bestrahlung von Körperelementen, wie beispielsweise einem Tumor, stören. Eine bewusste Unterdrückung der Atmung, die einen großen Anteil an der Vital-Bewegung hat, ist nur für eine begrenzte Zeit möglich. Es wäre also wünschenswert, Informationen zur Verfügung zu haben, die auf die Vital-Bewegung des Tumors schließen lassen, um so einen Behandlungsstrahl nachzuführen, so dass dieser den Tumor während des gesamten Bestrahlungsvorganges trifft.

Diese Aufgabe wird gelöst durch die Gegenstände der unabhängigen Ansprüche 1, 14, 15 und 16.

Wie die Erfinder erkannt haben, lässt sich eine derartige Information generieren, wenn man in Analysebildern eine oder mehrere Regionen bestimmt, die Körperelemente darstellen, die der Vital-Bewegung unterworfen sind. Hat man die Region bestimmt, so ist auch die Lage der Region im Analysebild bestimmt, die sich von Analysebild zu Analysebild ändert und somit die Vital-Bewegung widerspiegelt. Analysebilder sind Bilder, die durch medizinische Analyseverfahren, wie Röntgendiagnostik, Kernspinanalyse, Ultraschallanalyse, etc. erzeugt werden. Die spätere Nennung von "Röntgenbild" anstelle von "Analysebild" ist rein beispielhaft.

Behandlungsstrahlen sind beispielsweise Röntgenstrahlen oder Teilchenstrahlen oder Ultraschall, die insbesondere zur Zerstörung malignen Gewebes eingesetzt werden.

Durch das erfindungsgemäße Bestimmungsverfahren werden vorzugsweise Röntgenbilder eines anatomischen Körpers verarbeitet, die vital-bewegte Körperelemente des anatomischen Körpers, insbesondere einen Tumor darstellen. Wie später erläutert wird, kann genutzt werden, dass neben dem Tumor auch andere vital-bewegte Körperelemente, die möglicherweise leichter als der Tumor erkennbar sind, dargestellt sind. Körperelemente sind hierbei beliebige Bereiche des Körpers, die nicht klar abgegrenzt sein müssen und auch keine bestimmte Funktion haben müssen. Insbesondere können sie Abschnitte mehrerer Körperteile und Übergangsbereiche zwischen zwei Körperteilen umfassen, die insbesondere im Analysebild gut erkennbar sind, wie z.B. einen Abschnitt des Randes des Zwerchfells. Regionen des Analyse-bildes, die ein vital-bewegtes Körperelement darstellen, werde als Vorab-Regionen bezeichnet, falls sie vor dem (automatischen) Bestimmungsprozess gewonnen wurden und die Grundlage für den (automatischen) Bestimmungsprozess bilden. Regionen, die durch das erfindungsgemäße Bestimmungsverfahren (Bestimmungsprozess) (automatisch) bestimmt werden, werden als Prozess-Regionen bezeichnet. Die Vorab-Analysebilder werden insbesondere vor einer die Vital-Bewegungen berücksichtigenden Steuerung des Behandlungsstrahls gewonnen und werden insbesondere zur automatischen Bestimmung von Prozess-Regionen insbesondere während der Steuerung des Behandlungsstrahls genutzt. Soweit hierin oder in den Ansprüchen davon die Rede ist, dass die Vorab-Analysebilddaten ein Vorab-Analyscbild umfassen, bedeutet dies in Einklang mit dem üblichen Sprachgebrauch, dass die Vorab-Analysebilddaten auch mehrere Vorab-Analysebilder umfassen können. Soweit davon die Rede ist, dass das Vorab-Analysebild eine Vorab-Region umfasst, bedeutet dies im Einklang mit dem üblichen Sprachgebrauch, dass das Vorab-Röntgenbild auch mehrere Vorab-Regionen umfassen kann. Falls hierin oder in den Ansprüche davon die Rede ist, dass die Prozess-Analysebilddaten die Beschreibung eines Prozess-Analysebildes umfassen, bedeutet dies, dass sie auch die Beschreibung mehrerer Prozess-Analysebilder umfassen können. Soweit hierin oder in den Ansprüchen davon die Rede ist, dass eine Prozessregion bestimmt wird, ist damit im Einklang mit dem üblichen Sprachgebrauch nicht ausgeschlossen, dass mehrere Prozess-Regionen bestimmt werden. Die bereitgestellten Vorab-Analysebilddaten umfassen also die Beschreibung mindestens eines Vorab-Analysebildes, das zumindest eine Vorab-Region umfasst.

Entsprechend umfassen die Prozess-Analysebilddaten mindestens die Beschreibung eines Prozess-Analysebildes, das mindestens eine Prozess-Region umfasst. Die Prozess-Regionen sind Bestandteil von nach den Vorab-Analysebildern gewonnene Analysebildern, die dem erfindungsgemäßen Bcstimmungsverfahren zugeführt werden und durch Prozess-Analysebilddaten beschrieben werden. Diese Analysebilder werden hierin als Prozess-Analysebilder bezeichnet. Ein aktuell gewonnenes Prozess-Analysebild stellt die aktuelle Lage von vital-bewegten Körperelementen des anatomischen Körpers dar. Wird eine Prozess-Region im Prozess-Analysebild bestimmt, so ist damit auch die Lage der Prozess-Region, die als "Prozess-Lage" hier bezeichnet wird, im Prozess-Analysebild bestimmt. Die Prozess-Lage kann beispielsweise durch die Angabe der Pixel beschrieben werden, die die Prozess-Region bildet oder z.B. durch die Angabe, wo die Pixel im Röntgenbild liegen, die die Ecken der Prozess-Region bilden. Die Prozess-Lage einer Prozess-Region kann sich von Prozess-Analysebild zu Prozess-Analysebild ändern, da die Prozess-Region ein vital-bewegtes Körperelement darstellt. Diese Prozess-Lagen, die ein Ergebnis des erfindungsgemäßen Bestimmungsverfahrens sind, werden vorzugsweise von dem Bestimmungsverfahren (automatisch) ausgegeben und können zur (automatischen) Steuerung eines Behandlungsstrahles genutzt werden. Um die bestimmten Prozess-Lagen zu nutzen, kann eine Beziehung zwischen der (zweidimensionalen) Prozess-Lage im Prozess-Analysebild zu einer (dreidimensionalen) Lage des Raumabschnitts, in dem der Behandlungsstrahl wirken soll, vorab abgespeichert sein oder bestimmt werden. Diese Beziehung kann beispielsweise über eine Rückprojektion bei bekannter Kamerageometrie eines Röntgenstrahlgeräts, das ein Beispiel für ein Analysegerät darstellt, bestimmt werden. Vorzugsweise werden hierzu mindestens zwei Röntgenkameras eingesetzt und werden die Prinzipien der Epipolargeometrie genutzt. Beispielsweise können auch Analysebilder von einem Kalibriermodell erstellt werden, beispielsweise Röntgenbilder von einem im Röntgenbild sichtbaren Kallbriermodell, das anstelle eines Patienten in den Bereich gelegt wird, in dem später der Patient liegen soll. Durch Auswerten der Analysebilder von dem Kalibriermodell kann bestimmt werden, welche Koordinate im Röntgenbild welchen dreidimensionalen Koordinaten (in einem Bezugssystem, z.B. im Behandlungsraum) entsprechen. Hierzu können auch Markervorrichtungen eingesetzt werden, die an dem Kalibriermodell angebracht sind, um so durch Detektion der Markervorrichtung die Lage einzelner Teile des Kalibriermodells im Bezugssystem (z.B. im Behandlungsraum) bestimmen zu können. Vorzugsweise sind diese Teile des Kalibriermodells von einer spezifischen Gestalt, so dass sie im Analysebild erkennbar sind.

Die bereitgestellten Prozess-Analysebilddaten beschreiben also vorzugsweise ein gegenwärtiges Prozcss-Analysebild und werden vorzugsweise nach einer vorgegebenen Zeitspanne (z.B. > 10 ms und/oder kleiner 1 min) aktualisiert, so dass die im Laufe der Zeit bereitgestellten Prozess-Analysebilddaten eine Abfolge von Prozess-Analysebildern beschreiben, beispielsweise ein Vielzahl von Prozess-Analysebildern pro Minute, insbesondere pro Vitalbewegungs-Zyklus (z.B. Atmungs-Zyklus). Die hierin betrachteten Vitalbewegungen sind insbesondere zyklisch, durchlaufen also wiederholt denselben oder einen ähnlichen Bewegungspfad. Insbesondere ist die Periode einer hierin betrachteten Vitalbewegung kürzer als eine Minute. Die Bestimmung der Prozess-Region erfolgt vorzugsweise in dem gegenwärtigen Prozess-Analysebild, um so eine aktuelle Prozess-Lage zu bestimmen und insbesondere auszugeben. In dem Prozess-Analysebild kann eine Prozess-Region oder können mehrere Prozess-Regionen bestimmt werden. Die Prozess-Region wird so bestimmt, dass sie der Vorab-Region entspricht, wobei ebenfalls mindestens eine Vorab-Region bereitgestellt wird aber auch mehrere bereitgestellt werden können. Jeder der Prozess-Regionen ist also eine Vorab-Region zugeordnet. Die Bestimmung der Prozess-Region erfolgt basierend auf der (zugeordneten) Vorab-Region dergestalt, dass sie dieser (möglichst genau) entspricht. Hierbei können Bilderkennungsverfahren, wie z.B. Mustcrerkennungsverfahren eingesetzt werden. Insbesondere wird die Größe und/oder Form der Vorab-Region gleich der Größe und/oder Form der Prozess-Region. Insbesondere wird mittels des Bilderkennungsverfahrens in dem Prozess-Analyscbild nach einer Region gesucht, die eine möglichst große Ähnlichkeit zu der Vorab-Region oder zu einer der (ausgewählten) Vorab-Regionen aufweist. Vorzugsweise wird dann diejenige ausgewählt, die die größte Ähnlichkeit zeigt. Als Maß für die Ähnlichkeit kann beispielsweise die Summe der Beträge oder der Quadrate der Differenz der Pixelwerte eines Differenzbildes gelten, wenn das Differenzbild aus einem Kandidaten für eine Prozess-Region und der Vorab-Region gebildet wird. Auch kann als Maß für die Ähnlichkeit ein die Korrelation zwischen Vorab-Region und Pnozess-Region beschreibender Korrelationskoeffizient bestimmt werden. Insbesondere "entspricht" eine Prozess-Region einer Vorab-Region, wenn sie zumindest ein vorbestimmtes Ähnlichkeitsmaß erfüllt, falls das Ähnlichkeitsmaß der Prozess-region im Vergleich zu anderen Regionen eine maximale Ähnlichkeit anzeigt. Im Falle der Bestimmung von Beträgen oder Quadraten ist das Ähnlichkeitsmaß maximal, falls beispielsweise die Beträge oder Quadrate minimal sind. Im Falle der Bestimmung von Korrelationskoeffizienten ist beispielsweise das Ähnlichkeitsmaß maximal, falls sie maximal sind. Gemäß einer weiteren Ausführungsform stellen Regionen, für die das Ähnlichkeitsmaß einen Schwellenwert überschreitet und somit ausreichend ist, Kandidaten für eine Prozess-Region dar. Aus den Kandidaten kann dann eine Prozess-Region gemäß weiteren Kriterien ausgewählt werden.

Gemäß einer Ausführungsform wird ein Suchrahmen mit der Größe der Vorab-Region festgelegt. Der Suchrahmen wird dann beispielsweise auf das Prozess-Bild, um dieses abzusuchen oder wird beispielsweise nur auf den Bestimmungsbereich gelegt, um nur diesen abzusuchen. Das Bild innerhalb des Suchrahmens wird mit der Vorab-Region verglichen. Ist ein ausreichendes Ähnlichkeitsmaß erfüllt, so ist die Prozess-Region gefunden. Beim Suchvorgang wird vorzugsweise der Suchrahmen pixelsweise Schritt für Schritt verschoben, wobei in jedem Schritt das Ähnlichkeitsmaß bestimmt wird und mit einem vorgegebenen Schwellenwert verglichen wird. Der Suchvorgang wird vorzugsweise fortgesetzt, bis das gesamte Prozess-Bild oder der gesamte Bcstimmtmgsbereich mit dem Suchrahmen gescannt ist. Das Suchverfahren lässt sich natürlich auch optimieren, um es zu beschleunigen, so dass im günstigen Fall nicht pixelweise sondern gezielter gesucht wird.

Die Bestimmung der Prozess-Region und damit der Prozess-Lage (der Prozess-Region) im Prozess-Analyscbild wird vorzugsweise unter Zuhilfenahme von Bewegungsdaten durchgeführt, wie dies weiter unten erläutert wird. Gemäß einer Variante der Erfindung kann die bestimmte Prozess-Lage, die unter Zuhilfenahme der Bewegungsdaten oder ohne Zuhilfenahme der Bewegungsdaten bestimmt wurde, genutzt werden, um die Lage eines zweiten vital-bewegten Körperelements zu bestimmen. Hierbei nutzt man, dass manche vital-bewegte Körperelemente im Analysebild (Vorab-Analysebild oder Prozess-Analysebild) leichter (autotnatisch) erkennbar sind als andere vital-bewegte Körperelemente, insbesondere als ein zu bestrahlendes vital-bewegtes Körperelement. Soweit hierin allgemein von der "Lage eines vital-bewegten Körperelements" die Rede ist soll damit sowohl die Lage der Abbildung des vital-bewegten Körperelements im Analysebild (Vorab-Analysebild und/oder Prozess-Analysebild) umfasst sein als auch die Lage des vital-bewegten Körperelements im dreidimensionalen Raum, beispielsweise in einem Raum eines Bezugssystems, also beispielsweise eines Bezugssystems eines Navigationssystems oder des Behandlungsraums. Sowohl aus der Lage im Analysebild als auch aus der Lage im dreidimensionalen Raum kann Information für die Steuerutig eines Behandlungsstrahles bereitgestellt werden.

Wie eben erwähnt wurde, kann die bereits bestimmte Prozess-Lage eines ersten vital-bewegten Körperelements (im Prozess-Bild) genutzt werden, um die Lage eines zweiten vital-bewegten Körperelements zu bestimmen. Hierzu werden vorzugsweise Relativlagedaten genutzt. Diese Relativlagedaten können beispielsweise bereitgestellt werden. Insbesondere können sie durch ein dreidimensionales, bevorzugt vierdimensionales Analyseverfahren bestimmt werden, das dreidimensionale, bevorzugt vierdimensionale Körperdaten erzeugt. Die vierte Dimension bezieht sich hier auf die Zeit. Beispielsweise können mit einem vierdimensionalen CT die Relativlage zwischen einem ersten vital-bewegten Körperelement und einem zweiten vital-bewegten Körperelement vorab, also vor dem Bestrahlungsvorgang, bestimmt werden. Hierzu wird auf folgende Patentanmeldung verwiesen: US-Patentanmeldung Nr. 60/982,761.

Wie darin beschrieben wurde, wird die Relativlage unter der Berücksichtigung der Vitalbewegungen bestimmt. Insbesondere umfassen so die Relativlagedaten "situationsabhängige" Relativlagen zwischen dem ersten und zweiten Körperelement. Der Begriff "situationsabhängig" soll hier bedeuten, dass die Relativlage von der Situation der Vitalfunktion (Situation der Atmung, also beispielsweise Grad des Einatmens oder Ausatmens) abhängig ist. Insbesondere können die Relativlagedaten auch von dem Herzschlag abhängig sein, also beispielsweise von der Situation, die bei Beginn, der Mitte oder dem Ende eines Herzschlagzyklus gegeben ist. Die "Situation" bezieht sich also insbesondere auf die unterschiedlichen Amplituden, die bei den zyklischen Vorgängen der Vitalfunktionen (Atmung und/oder Herzschlag) gegeben sind. Bei den Relativlagedaten kann es sich somit statische und/oder "situationsabhängige", also dynamische Relativlagedaten handeln. Diese Relativlagedaten, werden dann vorzugsweise genutzt, um aus der bestimmten Prozess-Lage des ersten vital-bewegten Körperelements die (zwei- oder dreidimensionale) Lage des zweiten vital-bewegten Körperelements zu bestimmen. Da die Relativlagedaten im vorgenannten Fall dreidimensionale Lagebeziehungen beschreiben, kann bei der Bestimmung der Lage des zweiten vital-bewegten Körperelements beispielsweise wie folgt vorgegangen werden. Es wird aus der Prozess-Lage des ersten vital-bewegten Körperelements eine dreidimensionale Lage berechnet. Hierzu kann Information über die Abbildungsgeometrie (Abbildungsgeometriedaten) genutzt werden, die bei der Erzeugung der Analysebilder gegeben ist. Insbesondere können die Prinzipien der Epipolargeometrie, der Rückprojektion und/oder ein Kalibriermodell eingesetzt werden. Der Zusammenhang zwischen zweidimensionalen Röntgenbilddaten von einem Kalibriermodell und dreidimensionalen Kalibrierdaten eines Kalibriermodells kann genutzt werden, um Regionen im Röntgenbild Regionen im 3D-CT-Bild zuzuordnen. Hierzu wird beispielsweise auf die EP 2 119 397 A1 (entsprechend US 2009-285366A1) desselben Anmelders hingewiesen. Dort wird die Nutzung der Abbildungsgeometrie zur Bestimmung des Zusammenhangs und insbesondere das Loch-Kameraprinzip mit weiteren Zitatstellen erläutert. Das Prinzip der Epipolargeometrie, das einen Zusammenhang zwischen 2D-Röntgenbild und 3D-Punkten herstellt ist in folgenden Anmeldungen desselben Anmelders mit weiteren Zitatstellen erläutert:
EP 1 958 585 und
EP 1 959 391 bzw.
US 2008-0212871 und
US 2008-0194948.

Ist somit aus der Prozess-Lage des ersten vital-bewegten Körperelements eine dreidimensionale Lage berechnet, so kann beispielsweise durch einfache Vektorrechnung, die Lage des zweiten vital-bewegten Körperelements bestimmt werden indem auf die Relativlagedaten zurückgegriffen wird. Diese Bestimmung kann, falls die Relativlagedaten "situationsabhängig" sind, mit den Bewegungsdaten kombiniert werden. Die Relativlagedaten sind also von den weiter unten erwähnten Vital-Parametern (wie z.B. Amplitude der Atmung oder der Herzfrequenz) abhängig. Die Relativlage kann somit bei einem für die gegenwärtige Situation gegebenen Vital-Parameter berechnet werden. Diese so berechnete Relativlage wird dann genutzt, um die Lage zwischen dem ersten und zweiten vital-bewegten Körperelement zu bestimmen.

Vorzugsweise wird dem erfindungsgemäßen Bestimmungsverfahren, z.B. durch Benutzereingabe, mitgeteilt, welchen Bereich die Vorab-Region, die das erste vital-bewegte Körperelement darstellt, in einem durch die dreidimensionalen oder vierdimensionalen Körperdaten dargestellten Modell des Körpers entsprechen. Ist dieser Bereich identifiziert, so kann die Relativlage zu dem zweiten vital-bewegten Körperelement aus den dreidimensionalen oder vierdimensionalen Körperdaten bestimmt werden. Der Vorteil liegt hierin insbesondere darin begründet, dass diese dreidimensionalen und bevorzugt vierdimensionalen Körperdaten eine höhere und insbesondere räumliche Auflösung haben und somit eine Identifikation eines zu bestrahlenden Körperteils, insbesondere Tumors erleichtern. Alternativ kann auch so vorgegangen werden, dass vorab in einem dreidimensionalen Modell, ein Bereich als erstes vital-bewegtes Körperelement festgelegt wird, von dem ausgegangen wird, dass es im Analysebild leicht erkennbar ist. Dieses erste vital-bewegte Körperelement wird dann bevorzugt von einem Bediener im Analysebild erkannt, der daraufhin die Vorab-Region festlegt, die das erste vital-bewegte Körperelement zeigt. Die somit festgelegte Vorab-Region dient dann als Ausgangspunkt für das erfindungsgemäße Verfahren. Weiter sind die Relativlagedaten zwischen dem ersten vital-bewegten Körperelement und dem zweiten vital-bewegten Körperelement aus den dreidimensionalen oder vierdiniensionalen Körperdaten bekannt.

Gemäß einer weiteren Variante lässt sich aufgrund der vorzugsweise bekannten Informationen über die Abbildungsgeometrie des Analysegeräts, das bei der Erzeugung der Analysebilddaten eingesetzt wird, die Lage einer Vorab-Region im Analysebild berechenbar, die das zweite vital-bewegte Körperelement (für den Betrachter erkennbar oder nicht erkennbar) darstellt. Auf diese Art und Weise kann der Bediener am Bildschirm die relative Lage zwischen dem ersten vital-bewegten Körperelement und dem zweiten vital-bewegten Körperelement verfolgen.

Die Relativlagedaten können in Abhängigkeit von Vital-Parametern bereitgestellt oder bestimmt werden (siehe oben). Die Relativlagedaten können aber auch (alternativ oder zusätzlich) in Abhängigkeit von der Prozess-Lage (des ersten vital-bewegten Körperelements) bereitgestellt werden. Insbesondere kann basierend auf den vierdimensionalen Relativlagedaten, die also verschiedene Relativlagen für verschiedene Situation zeigen, eine Korrelation zwischen der (absoluten) Lage des ersten vital-bewegten Körperelements und der Relativlage zwischen dem ersten vital-bewegten Körperelement und dem zweiten vital-bewegten Körperelement festgestellt werden. Die dreidimensionale Lage des ersten vital-bewegten Körperelements kann mit der Prozcss-Lage mittels der Abbildungsgeometriedaten z.B. über die bereits oben erwähnten Verfahren (Rückprojektion, Epipolargeometrie) und/oder mittels eines Kalibriermodells in Beziehung gesetzt werden. Daraus kann bestimmt werden, welche Prozess-Lage des ersten vital-bewegten Körperelements welcher dreidimensionalen Lage des ersten vital-bewegten Körperelements in den Relativlagedaten entspricht. Auf diese Art und Weise können Relativlagedatcn dergestalt bereitgestellt werden, dass sie für eine bestimmte Prozess-Lage eine bestimmte Relativlage zwischen dem ersten vital-bewegten Körperelement und dem zweiten vital-bewegten Körperelement beschreiben. Die derart modifizierten Relativlagedaten können dem erfindungsgemäßen Verfahren bereitgestellt werden und können somit als Grundlage für eine "situationsabhängige" (in diesem Fall also in Abhängigkeit von der Prozess-Lage) Bestimmung der Relativlage und somit der Lage des zweiten vital-bewegten Körperelements genutzt werden.

Wie oben beschrieben, können die Relativlagedaten vorab durch Analyseverfahren (beispielsweise vierdimensionales CT) bestimmt werden und dem erfmdungsgemäßen Bestimmungsverfahren bereitgestellt werden. Auch können die Relativlagedaten aus der Bestimmung zweier Vorab-Regionen abgeleitet werden, wobei beispielsweise eine erste Vorab-Region der oben erwähnten Vorab-Region entspricht, die das erste vital-bewegte Körperelement darstellt, und eine zweite Vorab-Region das zweite vital-bewegte Körperelement darstellt, wie im Folgenden erläutert wird. Auch hierbei können die Relativlagedaten "situationsabhängig", also in Abhängigkeit von mindestens einem Vital-Parameter bestimmt werden. Auch (zusätzlich oder alternativ) können die Relativlagedaten in Abhängigkeit von der Lage der ersten Vorab-Region, die das erste vital-bewegte Körperelement darstellt, bereitgestellt werden. Ebenfalls ist es möglich aus den vierdimensionalen Körperdaten zu rechnen, wie die Relativlagedaten im Prozess-Analyscbild von der gegenwärtigen Prozess-Lage abhängen. Hierzu können wiederum die oben erwähnten Abbildungsgeomctriedaten und/oder das Kalibriermodell genutzt werden. Beispielhaft wird im Folgenden aber von einer konstanten Relativlagc ausgegangen. Dies heißt, die Relativlage ist auch für verschiedene Vital-Parameter gleich.

Wie bereits oben erwähnt können mehr als eine Vorab-Region bereitgestellt werden, die zur Bestimmung der Lageänderung genutzt werden können. Beispielsweise kann ein Arzt in einem Vorab-Analysebild eine erste Vorab-Region bestimmen, die ein leicht erkennbares, vital-bewegtes Körperelement darstellt, wie beispielsweise ein Element, das einen Abschnitt des Randes des Zwerchfells umfasst. Eine Region, die einen Abschnitt des Zwerchfellrandes umfasst, zeigt üblicherweise im Analysebild einen relativ hohen Kontrast am Zwerchfellrand. Dieser Rand bewegt sich mit der Atmung mit, ist also ein vital-bewegtes Körperelement. Eine weitere, zweite Vorab-Region kann dann beispielsweise den Tumor darstellen, der ebenfalls durch die Atmung vital-bewegt wird. Basierend auf der ersten Vorab-Region wird die erste Prozess-Region bestimmt, die der ersten Vorab-Region zumindest in einem vorbestimmten Umfang ähnelt und dasselbe vital-bewegte Körperelement darstellt, wie die erste Vorab-Region. Dies ist aufgrund der leichten Erkennbarkeit des ersten vital-bewegten Körperelements (im Beispiel des Zwerchfellrandes) mit hoher Zuverlässigkeit möglich. Da beide Vorab-Regionen bekannt sind, ist auch ihre Relativlage bekannt, die hierin als "Vorab-Relativlage" bezeichnet wird und ein Beispiel für die Relativlagedaten darstellt. Geht man davon aus, dass die Vorab-Relativlage durch die Vital-Bewegung unbeeinflusst ist, so lässt sich aus der Lage der ersten Prozess-Region und der bekannten Vorab-Relativlage die Lage der zweiten Prozess-Region (automatisch) bestimmen, ohne Bilderkennungsverfahren zu nutzen. Alternativ kann man die so berechnete vermutliche Lage der zweiten Prozess-Region nutzen, um einen Bereich einzuschränken, in dem nach der zweiten Prozess-Region mit einem Bilderkennungsverfahren gesucht werden soll, indem man also den Bestimmungsbereich zur Bestimmung der zweien Prozess-Region einschränkt. Auch auf diese Weise kann die Bestimmung der zweiten Prozess-Region, die im genannten Beispiel den Tumor darstellt, mit einer hohen Sicherheit durchgeführt werden. Ist die zweite Prozess-Region bestimmt, ist somit auch ihre Lage im (gegenwärtigen) Prozess-Analysebild (automatisch) bestimmt, so dass hierauf basierend die Steuerung durchgeführt werden kann. Alternativ zur oben genannten Vorab-Relativlage zwischen der ersten und zweiten Voräb-Region kann die Berechnung auch auf einer "ersten Relativlage" zwischen erster Vorab-Region und erster Prozess-Region basieren. Hierbei wird dann vorzugsweise davon ausgegangen, dass die zweite Relativlage zwischen zweiter Vorab-Region und zweiter Prozess-Region der ersten Relativlage entspricht, dass sich also die zweite Region (von der Erstellung des Vorab-Analysebildes bis zur Erstellung des Prozess-Analysebildes) im gleichen Umfang bewegt hat. Durch die Bestimmung der ersten Prozess-Region und der ersten Relativlage zwischen der ersten Vorab-Region und der ersten Prozess-Region können also Informationen über die Bewegung der vital-bewegten Körperelemente bestimmt werden. Diese so gefundenen Informationen stellen ein Beispiel für die weiter unten noch erwähnten Bewegungsdaten dar, auf deren Grundlage die Bestimmung einer Prozess-Region und insbesondere die Bestimmung des Bestimmungsbereichs bevorzugt durchgeführt wird. Die Bestimmung zumindest einer der beiden vorgenannten Relativlagen und die Bestimmung der ersten Prozesslage in Verbindung mit der bereitgestellten ersten und zweiten Vorab-Lage enthalten Informationen über die Bewegung der vital-bewegten Körperelemente und stellen somit ein Beispiel für die weiter unten erwähnten Bewegungsdaten dar. Im Allgemeinen können die Bewegungsdaten bereitgestellt werden, also insbesondere vor der Durchführung des Verfahrens bestimmt worden sein. Vorzugsweise werden sie vor der Bestimmung der Prozess-Lagen basierend nur auf den Vorab-Regionen und/oder Vorab-Lagen bestimmt. Zu der Bestimmung von Bewegungsdaten können aber auch (zusätzlich oder alternativ) gemäß anderer Ausführungsformen Prozess-Lagen und/oder Prozess-Regionen herangezogen werden.

Das erfindungsgemäße Bestimmungsverfahren strebt an, die eingehenden Prozess-Analysebilddaten möglichst in Echtzeit zu verarbeiten, um Lagedaten auszugeben, die die Lageänderung vital-bewegter Körperelemente beschreiben und die eine Steuerung möglichst in Echtzeit eines Behandlungsstrahls erlauben. Ein effektives und somit mit möglichst geringem Rechen- und Zeitaufwand verbundenes Auffinden der Prozess-Regionen wird deshalb vorteilhaft angestrebt. Um die Bestimmung der Prozess-Regionen möglichst effektiv zu gestalten, werden vorteilhaft Bewegungsdaten genutzt, die Informationen über die Vital-Bewegungen umfassen. Basierend auf den Bewegungsdaten wird insbesondere ein Bestimmungsbereich bestimmt, der nur einen Teil des Prozess-Analysebildes ist und auf dem der Vorgang der Bestimmung der Prazess-Region beschränkt wird. Auch können mehrere Regionen als Kandidaten für die Bestimmung als Prozess-Region zur Verfügung stehen, da sie beispielsweise ein ausreichendes Ellnnlichlceitsmaß erfüllen, um sich als Kandidaten-Region zu qualifizieren. Dann werden gemäß einer Ausführungsform diejenigen Kandidaten-Regionen ausgeschlossen, die außerhalb des Bestimmungsbereiches liegen und/oder eine Hinweisinformation wird ausgegeben, falls keine Kandidaten-Region innerhalb des Bestimmungsbereiches liegt. Basierend auf der Hinweisinformation kann z.B. in diesem Fall der Bchandlungsstrahl unterbrochen werden und/oder eine Warnung ausgegeben werden. Der Bestimmungsbereich umfasst insbesondere eine kleinere Pixelzahl als das Prozess-Analysebild. Insbesondere weniger als 50% oder weniger als 20% oder 10% der Pixel. Die Prozess-Region ist insbesondere kleiner als der Bestimmungsbereich. Das heißt der Bestimmungsbereich wird vorzugsweise größer als die Vorab-Region gewählt. Der Bestimmungsbereich ist insbesondere größer, insbesondere mehr als doppelt so groß oder mehr als viermal so groß wie die Vorab-Region oder Prozess-Region. Die Vorab-Region und Prozess-Region umfasst vorzugsweise mehr als 500 oder 1000 oder 2000 oder 5000 oder 10.000 Pixel des Analysebildes. Beispiele lauten wie folgt:
170x140 = 23800 Pixel
120x170 = 20400 Pixel
78x100 = 7800 Pixel
82x82 = 6724 Pixel

Zu diesen Bewegungsdaten werden erfindungsgemäß insbesondere Daten gezählt, in welchem Bereich der Vorab-Analysebilder die Vorab-Regionen, die ein bestimmtes Körperelement(z.B. Tumor) darstellen, erwartet werden. Basierend auf diesem Bereich, der Vorab-Subbild genannt wird, wird ein Prozess-Subbild bestimmt. Dieses Prozess-Subbild wird unter der Annahme gleich bleibender Aufnahmebedingungen und ruhiger Lage des Patienten vorzugsweise so bestimmt, dass es den gleichen Ausschnitt im Proxess-Analysebild einnimmt, wie das Vorab-Subbild im Vorab-Analysebild. Das Prozess-Subbild ist ein Beispiel für den Bestimmungs-Bereich, in dem eine Bestimmung der Prozess-Region (automatisch) durchgeführt wird. Das Prozess-Subbild stellt ein Teilbild des Prozess-Analysebildes dar. Die Bewegungsdaten umfassen somit vorteilhaft Subbild-Definitionsdaten, die die Bestimmung eines Prozess-Stibbildes im Prozess-Röntenbild ermöglichen, das insbesondere den gegenwärtigen Zustand des anatomischen Körpers darstellt und insbesondere die gegenwärtige Lage eines der vital-bewegten Körperelemente darstellt. Vorzugsweise werden Vorab-Subbilder für jede der Vorab-Regionen eines Vorab-Analysebildes definiert, falls dieses mehrere Vorab-Regionen umfasst. Die Definition eines Vorab-Subbildes für eine Vorab-Region wird beispielsweise von einem Arzt durchgeführt, der vor der Behandlung mit einem Behandlungsstrahl eine Sequenz von Vorab-Analysebildern betrachtet, um festzustellen, in welchem Bereich eine bestimmte der Vorab-Regionen (z.B. die erste Vorab-Region) in jedem der Vorab-Analysebilder zu finden ist.

Vorzugsweise wird hierin davon ausgegangen, dass die Aufnahmebedingungen für die Analysebilder (Vorab-Analysebilder und Prozess-Analysebilder) gleich sind und gleich bleiben, wobei insbesondere der analomische Körper abgesehen von den Vital-Bewegungen in Ruhe ist, so dass sich seine Lage relativ zu dem Analysegerät nicht ändert. Die Analysebilder zeigen somit vorzugsweise jeweils den gleichen Ausschnitt aus dem anatomischen Körper soweit dieser Ausschnitt nicht durch Vital-Bewegungen beeinflusst ist. Betrachtet man eine Sequenz (Abfolge) von Vorab-Analysebildern oder Prozess-Analysebilder so scheint sich für den Betrachter somit eine Vorab-Region und/oder Prozess-Region innerhalb der Sequenz aufgrund der Vital-Bewegungen zu bewegen, während nicht vital-bewegte Körperelemente statisch erscheinen. Diese "Bewegung" der Regionen innerhalb der Sequenz folgt einem bestimmten Bewegungspfad, der, wie später erläutert wird, ebenfalls genutzt werden kann, um die Bestimmung einer Prozess-Region zu erleichtern.

Werden mehrere Prozess-Regionen bestimmt, so wird zumindest einer und vorzugsweise jeder Prozess-Region ein Prozess-Subbild zugeordnet, innerhalb von dem die Bestimmung der jeweiligen Prozess-Region erfolgen soll. Der Bestimmungsvorgang wird also vorzugsweise auf das Prozess-Subbild beschränkt, um so den Datenverarbeitungsaufwand zu verringern.

Die oben genannten Bewegungsdaten können auch so genannte Sequenzdaten umfassen. Die Sequenzdaten beschreiben die Lagen einer bestimmten Vorab-Region die diese in verschiedenen Vorab-Analysebildern einnimmt und somit den oben erwähnten Bewegungspfad oder eine Abfolge der Lagen. Die Sequenzdaten erlauben es somit einen Teilbereich eines jeden Prozess-Analysebild zu bestimmen, in dem der genannte Bewegungspfad liegt. Sucht man somit in dem Teilbereich nach der Prozess-Region, die der Vorab-Region entspricht, die dem Bewegungspfad durchläuft, so kann man die Prozess-Region in jedem der Prozess-Analysebilder mit einer erhöhten Sicherheit bestimmen. Der Teilbereich stellt somit ein weiteres Beispiel für einen Bestimmungsbereich das, der basierend auf den Bewegungsdaten bestimmt wird.

Die Sequenzdaten können auch für eine noch konkretere Festlegung eines Bestimmungsbereichs genutzt werden, wenn die Sequenzdaten, die die Abfolge der Lagen der Vorab-Regionen beschreiben, um die Lage der zuletzt bestimmten Prozess-Region ergänzt werden. Geht man davon aus, dass die Prozess-Regionen einen Bewegungspfad durchlaufen, der gleich dem durch die Abfolge beschriebenen Bewegungspfad ist, was aufgrund der gleich gebliebenen Vital-Bewegungen wahrscheinlich ist, so kann man schätzen, wo in etwa die Prozess-Lage der gegenwärtigen Prozess-Region liegen sollte, und zwar basierend auf der Lage der vorherigen Prozcss-Region und der durch die Sequenzdaten beschriebenen Abfolge von Vorab-Lagen. Wurden insbesondere die Vorab-Analysehilder mit derselben (und konstanten) Frequenz aufgenommen wie die Prozess-Analysebild gegenwärtig aufgenommen werden, so kann basierend auf der Reihenfolge der Vorab-Lagen und der letzten Prozess-Lage auf einen Bestimmungsbereich die aktuelle Prozess-Lage bestimmt werden. Die letzte Prozess-Lage liegt bei einer Vorab-Lage oder zwischen zwei Vorab-Lagen der Abfolge oder anders ausgedrückt bei einem Punkt des durch die Abfolge beschriebenen Bewegungspfades. Da die Frequenz der Analyscbildaufnahinen bekannt ist kann jedem Punkt oder Abschnitt des Bewegungspfades eine Gesehwindigkeit zugeordnet werden, mit dem die Bewegung entlang des Bewegungspfades erfolgt. Somit kann bei Kenntnis der letzten Prozess-Lage und der Frequenz die aktuelle Prozess-Lage vorausgesagt werden. Die so vorausgesagte Prozess-Lage kann dann als Grundlage zur Bestimmung der Lage des Bestimmungsbereichs genutzt werden. Insbesondere kann die Lage des Bestimmungsbereichs so gewählt werden, dass sie zumindest in etwa gleich der vorausgesagten Prozess-Lage ist. Lag beispielsweise die zuletzt bestimmte Prozess-Region zwischen der ersten und zweiten Vorab-Lage der Sequenz, so wird bevorzugt die Lage des Bestimmungsbereichs für die gegenwärtige Prozess-Region zwischen der zweiten und dritten Vorab-Lage festgelegt, wobei erste, zweite und dritte Vorab-Lage hier die Lage einer Vorab-Region zu aufeinanderfolgenden ersten, zweiten und dritten Zeitpunkten der Erstellung der Analysebilder bezeichnen. Lag aber beispielsweise die zuletzt bestimmte Prozess-Region bei der ersten Vorab-Lage der Abfolge von Vorab-Lagen, so wird der Bestimmungsbereich für die gegenwärtige Prozess-Region vorzugsweise um die nächste, also zweite Vorab-Lage der Abfolge von Vorab-Lagen gelegt.

Die vorgenannten Festlegungen des Bestimmungsbereichs basierend auf den Sequenzdaten ist um so erfolgreicher, je konstanter "Amplitude" und Frequenz der einer Schwingung ähnelnden wiederkehrenden Vital-Bewegung ist. Die "Amplitude" entspricht dem Weg von der Mitte des Bewegungspfades zu den beiden Enden des Bewegungspfades. Unter der Annahme einer konstanten Amplitude kann der Bestimmungsbereich so gewählt werden, dass er den Bewegungspfad abdeckt.

Um den Bestimmungsbereich möglichst klein und flexibel wählen zu können, wird der durch die Vorab-Lagen beschriebene Bewegungspfad vorzugsweise mit Vitalfunktionsdaten korreliert, die die Vital-Funktionen kennzeichnen, also insbesondere Vital-Parameter, die den Puls oder die Atmung, insbesondere die Amplitude und/oder die Frequenz, also insbesondere die Amplitude in Abhängigkeit von der Zeit der jeweiligen Vital-Funktion beschreiben. Anders ausgedrückt, lässt sich so idealerweise bestimmen, an welchem Punkt der Schwingungsähnlich durchlaufenen Bewegungspfades sich die Prozess-Region gegenwärtig befindet. Vorzugsweise wird der Einfluss von Puls und Atmung auf die Bewegung analysiert, so dass deren Einfluss auf die Vital-Bewegung entkoppelt beschrieben werden kann. Vorzugsweise werden also Vitalfunktionsdaten bereitgestellt, die eine Vorhersage der Lage der Prozess-Region aufgrund einer Korrelation der Sequenzdaten mit den Vitalfunktionsdaten erlauben. Die Beschreibung der Bewegung der Prozess-Lagen entlang des Bewegungspfades kann beispielsweise auf einem Modell beruhen, das die Vitalbewegung aufgrund Atmung und die Vitalbewegung aufgrund des Pulses wie gekoppelte Schwingungen beschreibt. Vorzugsweise entkoppelt das Modell den Einfluss von Puls und Atmung auf die Vital-Bewegung. Insbesondere werden für verschiedene Vital-Bewegungen bestimmte Richtungen der Bewegung angenommen. Vorzugsweise nimmt man beispielsweise für die Atmung die Richtung inferior-superior an, während man für den Einfluss der Herzbewegung die Richtung medial-lateral annimmt. Man kann dann beispielsweise durch Funktionen, die zur Beschreibung zyklischer Vorgänge geeignet sind (wie Sinus oder Kosinus), die durch die Atmung verursachte Vital-Bewegung in der Inferior-Superior-Richtung beschreiben, während man die durch die Herztätigkeit bewirkte Bewegung in der lateral-medial-Richtung ebenfalls durch eine derartige Funktion beschreibt. Beiden Funktionen kann man natürlich unterschiedliche Maximalamplituden zuordnen und diese dann kombinieren.

Durch die Korrelation der Vitalfunktionsdaten mit den Sequenzdaten kann somit eine vermutete Lage der gegenwärtigen Prozess-Region mit einer hohen Genauigkeit bestimmt oder vorhergesagt werden. Die Lage des Bestimmungsbereiches wird dann vorzugsweise entsprechend der vorhergesagten Lage gewählt. Dies erlaubt es den Bestimmungsbereich klein zu halten und somit die Verarbeitungsgeschwindigkeit des Verfahrens zu erhöhen. Insbesondere können auf diese Art und Weise auch Lagedaten (zur Steuerung des Behandlungsstrahles) für die Zeit nach der Erstellung des gegenwärtigen Analysebildes bis zur Erstellung des nächsten Analysebildes vorhergesagt und ausgegeben werden.

Der vorhergesagte Bestimmungsbereich kann zum einen dazu genutzt werden, dass nur innerhalb dieses Bestimmungsbereichs nach der Prozess-Region basierend auf einem Vergleich mit der Vorab-Region gesucht wird. Auch kann der Bestimmungsbereich dazu genutzt werden, außerhalb des Bestimmungsbereichs gefundene Kandidaten für die gegenwärtige Prozess-Region auszuschließen. Mehr als ein Kandidat kann sich beispielsweise dann ergeben, wenn mehrere Regionen im Prozessbild eine Ähnlichkeit zur Vorab-Region aufweisen, die über einem vorbestimmten Ähnlichkeilsmaß liegt.

Die Bewegungshistorie der Prozess-Regionen und/oder der Vorab-Regionen wird vorzugsweise genutzt, um unter der Annahme einer stetigen, insbesondere gerichteten Bewegung der Regionen innerhalb der Sequenz von Prozess-Analysebildern den Bestimmungsbereich einzuschränken. Dabei wird insbesondere aus der Historie der Bewegung heraus die zukünftige Lage extrapoliert.

Gemäß einer weiteren Ausführungsform werden in einem Prozess-Analysebild mehrere Prozess-Regionen basierend auf mehreren Vorab-Regionen bestimmt. Für jede dieser bestimmten Prozess-Regionen wird vorzugsweise eine Historie der Bewegung gespeichert, um so eine Bewegungsrichtung für jede der Regionen bestimmen zu können. Da alle Regionen aufgrund derselben Vital-Funktionen bewegt werden, wird eine gleiche Bewegungsrichtung für alle Prozess-Regionen erwartet. Basierend auf dieser Erwartung werden derartige Prozess-Regionen für die Bestimmung der Lagedaten ausgeschlossen, die eine Abweichung von der erwarteten Bewegungsrichtung anzeigen. Die erwartete Bewegungsrichtung wird insbesondere durch die Mehrheit der bestimmten Bewegungsrichtungen festgelegt.

Vorteilhaft werden an einem Bildschirm zur Bestimmung der Vorab-Regionen sich "bewegende Bereiche" des Analyse-Bildes hervorgehoben. Sich "bewegende Bereiche" sind Bereiche, die ihre Lage im Analysebild von Analysebild zu Analysebild ändern. Hierzu werden insbesondere Algorithmen genutzt, die eine Änderung des Bildinhaltes hervorheben. Hierzu kann beispielsweise die Technik der "Background Substraction", also eine Differenzbildung zwischen einem aktuellen Bild und einem Durchschnittsbild genutzt werden.

Das Durchschnittsbild ist beispielsweise der Durchschnitt einer bereits gewonnenen Sequenz von Analysebildern. Dieser Durchschnitt wird insbesondere für jede Pixelkoordinate berechnet. Infolgedessen werden durch "Background Substraction" unbewegte Teile im Bild unterdrückt.

Im Differenzbild bleibt also der bewegte Bereich erhalten und ist somit für einen Algorithmus oder den Arzt leichter erkennbar. Alternativ hierzu oder zusätzlich hierzu können Filterverfahren eingesetzt werden, wie beispielsweise ein Hochpassfilter, der in der Abfolge der Vorab-Analysebilder nur diejenigen Bereiche durchlässt oder hervorhebt, die sich ändern. Insbesondere können solche Bereiche, in denen Änderungen stattfinden, bildlich hervorgehoben werden, um so dem Arzt das Auffinden geeigneter Vorab-Regionen zu erleichtern.

Wie erwähnt können mehrere Analysebilder (Vorab-Analysebilder und/oder Prozess-Analysebilder) insbesondere zeitgleich unter verschiedenen Abbildungsgeometrien, also insbesondere unter verschiedenen Aufnahmerichtungen gewonnen werden und entsprechende Analysebilddaten dem Verfahren zur Verfügung gestellt werden. Somit werden also zur selben Zeit, insbesondere synchron dieselben vital-bewegten Körperelemente in verschiedenen Analysebildern (Vorab-Analysebilder und/oder Prozess-Analysebilder) dargestellt. Dies kann als zusätzliche Information genutzt werden, um eine Prozessregion mit einer höheren Sicherheit zu bestimmen und/oder die Bestimmung einer Prozessregion basierend auf einer Abbildungsgeometrie (Aufnahmerichtung) durch ein Prozess-Analysebild, das auf einer anderen Abbildungsgeomctrie (Aufnahmerichtung) basiert, zu überprüfen. Hierzu können die Prinzipien der Epipolargeometrie genutzt werden. Hierzu wird wiederum auf bereits hierin gegebenen Zitate verwiesen. Hierbei kann insbesondere genutzt werden, dass manche vital-bewegte Körperelemente in einem der Analysebilder leichter erkennbar sind als in einem anderen. Beispielsweise können die vital-bewegten Körperelemente durch andere Körperelemente in einem der Bilder verdeckt sein, während sie im anderen erkennbar sind. Durch die Kombination der aus verschiedenen Richtungen aber zeitgleich gewonnenen Analysebildern kann somit eine Prozessregion mit einer höheren Sicherheit bestimmt werden und das Verfahren insbesondere somit robuster gestaltet werden.

Dieses vorgenannte Prinzip, die zusätzliche Information von weiteren zeitgleich gewonnenen Analysebildern zu nutzen, kann bei jeglicher Art von Bestimmungsverfahren eingesetzt werden, insbesondere auch dann, wenn keine Bewegungsdaten verwendet werden und/oder keine Informationen über die Relativlage zwischen dem ersten und zweiten vital-bewegten KÖrperelement genutzt werden. Das vorgenannte Prinzip, insbesondere die Nutzung der Epipolargeometrie, kann also unabhängig davon eingesetzt werde, wie die Prozess-Region bestimmt wird.

Anders ausgedrückt, das vorgenannte Prinzip kann auch bei einem Bestimmungsverfahren eingesetzt werden, das nicht die Merkmale a und b des Anspruches 1 verwendet. Insbesondere ist gemäß einer Variante der Erfindung Folgendes umfasst:
Ein Bestimmungsverfahren um die Bestimmung der Lage eines zu bestrahlenden, vital-bewegten Körperelements mittels der Bestimmung einer Region (40) eines Analysebildes zu ermöglichen, wobei die Region ein vital-bewegtes Körperelement (10'), insbesondere einen Tumor eines anatomischen Körpers darstellt und die von Analysebild zu Analysebild eine die Vitalbewegung widerspiegelnde Lageänderung durchläuft, wobei die vital-bewegten Körperelemente zu bestrahlende oder nicht zu bestrahlende Elemente des Körpers sind, die sich bedingt durch Vitalfunktionen, wie Atmung und/oder Herzschlages auch bei ansonsten bewusst ruhig gehaltenem anatomischem Körper bewegen,
Vorab-Analysebilddaten werden bereitgestellt, die Beschreibung eines Vorab-Analysebild (100) umfassen, das eine Vorab-Region (50) aufweist, in der ein erstes vital-bewegtes Körperelement (10') dargestellt ist,
Prozess-Analysebilddaten werden bereitgestellt, die Beschreibung eines Prozess-Analyscbildes (20) der Körperstruktur umfassen,
basierend auf den Vorab-Analysebilddaten und den Prozess-Analysebilddaten wird in dem Prozess-Analysebild (20) eine Prozess-Region (40) bestimmt, die der Vorab-Region (50) entspricht und eine Prozess-Lage im Prozess-Analysebild einnimmt, wobei die Prozess-Analysebilddaten die Beschreibung zweier Prozess-Analysebilder umfassen, die zur selben Zeit aber unter verschiedenen Aufhahmerichtungen gewonnen wurden, und wobei die Prozess-Lage, die auf der Basis einer der zwei Prozess-Analysebilder gewonnen wurde, genutzt wird, um basierend auf Abbildungsdaten, die zumindest Information über die verschiedenen Aufnahmerichtungen umfassen, die Prozess-Region im anderen der zwei Prozess-Analysebilder zu bestimmen und/oder eine Bestimmung der Prozess-Region im anderen der zwei Prozess-Analysebilder zu überprüfen. Vorzugsweise umfasst der zuletzt genannte Schritt des Bestimmens und/oder Überprüfens Folgendes: Vorzugsweise wird basierend auf den Abbildungsdaten und der Prozess-Region in dem einen der zwei Prozess-Analysebilder eine Epipolarlinie, insbesondere eine Epipolargerade in dem anderen der zwei Prozess-Analysebilder bestimmt, um hierauf basierend dann die Prozess-Region im anderen der zwei Prozess-Analysebilder zu bestimmen oder die Bestimmung der Prozess-Region in dem anderen der zwei Prozess-Analysebilder zu überprüfen.

Die Abbildungsdaten umfassen bevorzugt Informationen über die Abbildungsgeometrie. Die Information über die Abbildungsgeometrie umfasst insbesondere Information über die Abbildungsrichtung. Die Information über die Abbildungsgeometrie umfasst vorzugsweise Information, die es erlaubt bei bekannter relativer Lage zwischen dem Analysegerät und dem durch die Analysestrahlen und/oder -wellen zu analysierenden Analyseobjekt (im gegebenen Fall der Patient oder ein Kalibriermodell) das Analysebild zu berechnen, falls das zu analysierende Objekt bekannt ist. Hierbei bedeutet "bekannt" dass die räumliche Gestalt des Analyseobjekts bekannt ist. Dies bedeutet, dass dreidimensionale "räumlich aufgelöste" Information über die Wechselwirkung des Analyseobjekts mit den Analysestrahlen und/oder Wellen bekannt ist. Dabei bedeutet "Wechselwirkung", dass beispielsweise die Analysewellen und/oder Strahlen von dem Analyseobjekt blockiert oder teilweise oder vollständig durchgelassen werden. Information über diese Wechselwirkung ist bevorzugt dreidimensional, z.B. aus einem dreidimensionalen CT bekannt und beschreibt die Wechselwirkung räumlich aufgelöst für (insbesondere alle) Punkte und/oder Bereiche des Analyseobjekts. Insbesondere erlaubt die Kenntnis der Abbildungsgeometrie die Berechnung einer Lage einer Quelle der Strahlen (z.B. im Fall einer Röntgenquelle) relativ zu einer Bildebene. Zum durch die Abbildungsgeometrie definierten Zusammenhang zwischen dreidimensionalen Analyseobjekten und zweidimensionalen Analysebildern wird insbesondere auf folgende Veröffentlichungen verwiesen:
1. "An Efficient and Accurate Camera Calibration Technique for 3D Machine Vision", Roger Y. Tsai, Proceedings of IEEE Conference on Computer Vision and Pattern Recognition, Miami Beach, FL, 1986, pages 364-374
2. "A versatile Camera Calibration Technique for High-Accuracy 3D Machine Vision Metrology Using Off the-Shelf TV Cameras and Lenses", Roger Y. Tsai, IEEE Journal of Robotics and Automation, Vol. RA-3, No. 4, August 1987, pages 323-344. siehe auch unter http://www.cs.cmu.edu/~rgw/TsaiDesc.html
3. Veröffentlichung von Ziv Yaniv, Leo Joskowicz, Ariel Simkin, et al. "Fluoroscopic X-ray Image Processing and Registration for Computer-Aided Orthopedic Surgery", 1st Int. Conf. on Medical Image Computing and Computer-Assisted Intervention, Lecture Notes in Computer Science 1496, Springer, Wells et al. editors, 1998, pp. 325 - 334
4. EP 2 119 397 A1
5. US 2009-285366 A1

Alternativ oder zusätzlich zu der obigen Ausführungsform werden bei einer Ausführungsform zur Bestimmung der Prozess-Regionen im obigen Sinne verarbeitete Prozess-Analysebilder genutzt. Insbesondere wird ein Differenzbild zwischen dem gegenwärtigen Prozess-Analysebild und dem vorherigen Prozess-Analysebild gebildet, um Bereiche zu erkennen, in denen eine Änderung stattfand, die also auf eine Bewegung schließen lassen. Die das Differenzbild darstellenden Daten stellen ebenfalls ein Beispiel für Bewegungsdaten dar. Der Bestimnungsbereich wird vorzugsweise so festgelegt, dass er diese Änderungsbereiche umfasst. Analog zum Differenzbild können auch andere Techniken zur Hervorhebung von Änderungen genutzt werden, wie z.B. der oben erwähnte Hochpassfilter.

Werden eine Reihe von Vorab-Regionen dem erfindungsgemäßen Verfahren bereitgestellt, beispielsweise durch die Auswahl eines Arztes, so kann bzw. können aus diesen bereitgestellten Vorab-Regionen automatisch eine oder mehrere Vorab-Regionen ausgewählt werden, die der Bestimmung der Prozess-Region zugrunde gelegt werden. Die Auswahl kann insbesondere darauf beruhen, dass die Informationsdichte in der auszuwählenden Vorab-Region höher ist als in anderen Vorab-Regionen. Dies erhöht die Wahrscheinlichkeit, dass eine entsprechende Prozess-Region korrekt erkannt wird. Beispielsweise kann hierzu die Bildenergie in der jeweiligen Vorab-Region oder der mittlere Kontrast oder die Komprimierbarkeit der jeweiligen Vorab-Region bestimmt werden. Diejenige Vorab-Region oder diejenigen Vorab-Regionen mit der höchsten Bildenergie, höchsten Kontrast oder geringsten Komprimierbarkeit werden dann bevorzugt ausgewählt. Wird beispielsweise ein vorgegebenes Kompressionsverfahren auf alle Vorab-Regionen angewendet, so wird vorzugsweise diejenige Vorab-Region ausgewählt (oder werden diejenigen Vorab-Regionen ausgewählt), die nach der verlustfreien Kompression den größten Datenumfang aufweisen. Hierbei wird angenommen, dass derartige Regionen mit einer höheren Sicherheit im Prozess-Analysebild erkannt werden können.

Hierin werden verschiedene Verfahren beschrieben, um einen Bestimmungsbereich festzulegen, z.B. durch die Bestimmung eines Subbildes, eines Teilbereichs oder eines Änderungsbereichs. Mindestens zwei dieser Verfahren können kombiniert werden, z.B. so dass letztendlich der Bestimmungsbereich als die Schnittmenge oder die Vereinigungsmenge der nach den verschicdcnen Verfahren bestimmten Bestimmungsbereiche festgelegt wird.

Werden hierin Daten, Regionen, Bereiche oder Bilder "bereitgestellt", so bedeutet dies, dass sie für die Nutzung durch das erfindungsgemäße Verfahren bereit sind. Diesen Zustand des "bereit seins" können die Daten, Regionen, Bereiche oder Bilder z.B. durch Erfassen der Daten, Regionen, Bereiche oder Bilder (z.B. durch Analysegeräte) oder durch Eingeben der Daten, Regionen, Bereiche oder Bilder (z.B. über Schnittstellen) erreichen. Die Daten können diesen Zustand auch dadurch haben, dass sie in einem Speicher (z.B. ROM, CD, Festplatte) abgespeichert und so für eine Verwendung im Rahmen des erfindungsgemäßen Verfahrens bereit sind.

Ist ein Bestimmungsbereich z.B. durch die Festlegung des oben erwähnten Subbildes und/oder des oben erwähnten Teilbereichs (letztendlich) festgelegt, so erfolgt vorzugsweise innerhalb dieses Bestimmungsbereichs eine Spreizung der Werte, also eine Spreizung der durch die Pixcldaten dargestellten Grauwerte auf die gesamte mögliche Grauwertskala. Dadurch wird künstlich der Dynamikumfang des Bestimmungsbereichs erhöht, um so die Erkennungswahrscheinlichkeit zu erhöhen.

Gemäß einer weiteren Ausführungsform wird die Kontur des Tumors bei dem Auffinden der Prozess-Regionen genutzt und/oder eine Änderung der Kontur des Tumors durch automatische Bildverarbeitung der Prozess-Region, die den Tumor darstellt, bestimmt und als zusätzliche Ausgangsdaten (Konturdaten) von dem Bestimmungsverfahren ausgegeben. Durch die Konturdaten, die die aktuelle Kontur des Tumors beschreiben, die sich von Prozess-Analysebild zu Prozess-Analysebild ändern kann, kann der Behandlungsstrahl an die aktuelle Tumorform so angepasst werden, dass er möglichst nur die durch die Kontur vorgegebene Fläche des Tumors durchstrahlt, also z.B. eine der Kontur entsprechende Querschnittsfläche aufweist. Dies kann auch beispielsweise so erfolgen, dass er den Tumor unter Berücksichtigung seiner Form abtastet oder scannt, falls der Behandlungsstrahl im Durchmesser kleiner als der Tumor ist. Insbesondere können Vorrichtungen gesteuert werden, die es erlauben die Querschnittsform des Behandlungsstrahls an die aktuelle Kontur des Tumors anzupassen. Hierzu wird beispielhaft auf folgende Patentanmeldungen hingewiesen:
US 7,386,099
US 5,889,834

Die Kontur eines Tumors kann beispielsweise vorab durch einen Arzt mithilfe der Vorab-Analysebilder festgelegt werden. Erfindungsgemäß kann die aktuelle Kontur insbesondere automatisch bestimmt werden, indem z.B. ein Kantendetektionsverfahren angewendet wird, um den Rand des Tumors in der Prozess-Region zu bestimmen, die den Tumor darstellt. Auch kann zusätzlich oder alternativ die vorab bestimmte Form und/oder Kontur des Tumors genutzt werden, um durch Anwendung von Ähnlichkeitsregeln und/oder unter der Annehme einer elastischen Verformung eine Anpassung der vorab festgelegten Kontur und/oder Form an die Bilddaten der Prozess-Region vorzunehmen, die insbesondere dem oben erwähnten Kantendetektionsverfahren unterzogen worden sind, um so die aktuelle Kontur und/oder Form und damit so genannte Konturdaten zu bestimmen. Hierbei angewendete Konzepte lauten:
Deformable Models, Active Contours und Snakes. Eine Übersicht hierzu findet man in der Veröffentlichung: "Deformable Models in Medical Image Analysis: A Survery" von Tim McInerney und Demetrie Terzopoulos, Oxford University Press; Medical Image Analysis (1996) volume 1, number 2, pp 91-108.

Wie oben erwähnt, gibt das erfindungsgemäße Verfahren vorzugsweise Lagedaten aus, die eine Steuerung der Lage des Behandlungsstrahls erlauben. Gemäß einer Ausführungsform können auch zusätzlich noch die Konturdaten ausgegeben werden, die insbesondere die Kontur, eine Formänderung und/oder Form des Tumors beschreiben, um auch hierauf basierend den Behandlungsstrahl und insbesondere die Form des Querschnitts des Behandlungsstahls zu steuern.

Bei einer weiteren Ausgestaltung des erfindungsgemäßen Verfahrens umfasst dieses die Bestimmung der Steuerdaten. Die Bestimmung der Steuerdaten erfolgt vorzugsweise basierend auf den Lagedaten, also auf den bestimmten Prozess-Lagen der Prozess-Regionen. Die aktuellen Steuerdaten werden hierbei vorzugsweise basierend auf der gegenwärtig bestimmten (also aktuell bestimmten) Prozess-Lage bestimmt. Weiter werden vorzugsweise Informationen genutzt, die die Relativlagen des Behandlungsstrahles relativ zu dem anatomischen Körper und der Analysestrahlen-Abbildungsgeometrie relativ zum Behandlungsstrahl beschreiben. Die bevorzugt bereitgestellten Informationen über die Analysestrahlen-Abbildungsgeometrie erlauben es insbesondere die Richtung der Analysestrahlen insbesondere relativ zum anatomischen Körper zu bestimmen, wobei die Analysestrahlen zur Erzeugung der Analysebilder genutzt werden. Informationen über den anatomischen Körper werden beispielsweise basierend auf vorab durchgeführten dreidimensionalen Analyseverfahren, wie einer dreidimensionalen Computertomographie und/oder einer Kernspinanalyse generiert. Insbesondere können auch Markervorrichtungen detektiert werden, die am anatomischen Körper angebracht sind und beispielsweise mit ruhenden und/oder vital-bewegten Körperteilen ortsfest verbunden sind. Insbesondere werden vorzugsweise Informationen über die relative Lage dieser Markervorrichtungen relativ zu in dem dreidimensionalen Analysebild dargestellten Körperteilen insbesondere ruhenden und/oder vital-bewegten Körperteilen, wie dem Tumor, bereitgestellt, wobei diese Informationen ein Beispiel für Vitalfunktionsdaten sind.

Gemäß einer Ausführungsform werden Analysebilder durch mehr als ein Analysegerät erstellt, wobei jedes Analysegerät eine unterschiedliche Analysestrahlen-Abbildungsgeometrie hat. Gemäß dieser Ausführungsform werden die Analysebilder, die von verschiedenen Analysegeräten erstellt werden separat verarbeitet. Gemäß einer Ausführungsform werden Hinweisinformationen ausgegeben, falls die basierend auf den unterschiedlichen Analysebildern (erzeugt durch die verschiedenen Analysegeräte mit verschiedenen Analysestrahlen-Abbildungsgeometrien) parallel (durch das erfindungsgemäße Bestimmungsverfahren) erzeugten Lagedaten widersprüchlich sind. Gemäß einer Ausführungsform wird, falls nur eine der parallel durchgeführten Bestimmnungsverfahren ein Ergebnis ausgibt, dieses Ergebnis verwendet. Vorzugsweise wird in diesem Fall dann ebenfalls eine Hinweisinformation ausgegeben.

Gemäß einer Ausführungsform wird vor Beginn der Behandlung, die Zuverlässigkeit des erfindungsgemäßen Bestimmungsverfahrens getestet, indem eine Abfolge von Prozess-Regionen durch das erfindungsgemäße Bestimmungsverfahren bestimmt werden und diese Abfolge von Prozess-Regionen an einem Bildschirm angezeigt wird. Der Arzt kann so überprüfen, ob die erfindungsgemäß automatisch erfolgte Bestimmung der Prozess-Regionen seine Erwartungen erfüllt. Die Bestimmung der Prozess-Regionen erfolgt hierbei also im Rahmen der Planung der Behandlung mit dem Behandlungsstrahl.

Die Erfindung ist weiter auf ein Programm gerichtet, das, wenn es auf einem Computer läuft oder in den Computer geladen wird, den Computer veranlasst das erfindungsgemäße Verfahren durchzuführen. Die Erfindung ist weiter auf einem Computer mit einem derartigen Programm gerichtet. Der Computer umfasst insbesondere Schnittstellen zur Eingabe der für den Programmablauf notwendigen Daten, wie der Vorab-Analysebilddaten und der Prozess-Analysebilddaten. Weiter werden vorzugsweise die Bewegungsdaten und/oder Sequenzdaten und/oder Korrelationsdaten eingegeben und erfindungsgemäß verarbeitet.

Die Erfindung ist weiter auf einen Speicher zur Speicherung des Programms, wie eine CD, DVD, ROM usw. gerichtet, auf dem das Programm gespeichert ist. Ebenfalls ist die Erfindung auf eine Signalwelle gerichtet, die Informationen trägt, die das Programm darstellen.

Im Rahmen der Erfindung können Computerprogrammelemente von Hardware und/oder Software (dies beinhaltet auch Firmware, im System abgespeicherte Software, Mikrocode usw.) verkörpert werden. Im Rahmen der Erfindung können Computerprogrammelemente die Form eines Computerprogrammprodukts annehmen, das durch ein auf einem Computer verwendbares oder computerlesbares Speichermedium verkörpert werden kann, das auf einem Computer verwendbare oder computerlesbare Programmanweisungen, "Code" oder ein "Computerprogramm" umfasst, die bzw. der bzw. das auf dem genannten Medium zur Verwendung auf oder in Verbindung mit dem System, das die Anweisung ausführt, verkörpert sind bzw. ist. Im Rahmen dieser Erfindung kann ein auf einem Computer verwendbares oder computerlesbares Medium irgendein Medium sein, dass das Programm zur Verwendung auf oder in Verbindung mit dem System, Apparat oder der Einrichtung, das bzw. der bzw. die die Anweisung ausführt, das Programm beinhalten, speichern, übermitteln, fortpflanzen oder transportieren kann. Das auf einem Computer verwendbare oder computerlesbare Medium kann z.B. ein elektronisches, magnetisches, optisches, elektromagnetisches, Infrarot- oder Halbleiter-System, ein solcher Apparat oder eine solche Einrichtung oder ein Ausbreitungsmedium wie z.B. das Internet sein, ist aber nicht auf diese Aufzählung beschränkt. Das auf einem Computer verwendbare oder computerlesbare Medium könnte sogar z.B. Papier oder ein anderes geeignetes Medium sein, auf das das Programm gedruckt ist, da das Programm elektronisch erfasst werden könnte durch z.B. optisches Scannen des Papiers oder anderen geeigneten Mediums und dann kompiliert, interpretiert oder andernfalls auf geeignete Weise prozessiert werden könnte. Das Computerprogrammprodukt und jegliche Software und/oder Hardware, das bzw. die hier beschrieben werden, bilden in den beispielhaften Ausführungsformen die verschiedenen Mittel zum Ausführen der Funktionen der Erfindung.

Weiter ist die Erfindung auf ein Behandlungsstrahlensystem gerichtet, das insbesondere den oben genannten Computer umfasst. Weiter umfasst das Behandlungsstrahlensystem vorzugsweise ein Behandlungsgerät zur Erzeugung und zum Ausstrahlen des Behandlungsstrahls. Dieses Behandlungsgerät ist vorzugsweise mit dem Computer gekoppelt, wobei der Computer Steuersignale ausgibt, die von dem Behandlungsgerät verarbeitet werden, so dass die Position des Behandlungsstrahls basierend auf den Steuersignalen geändert wird. Weiter umfasst das Behandlungsstrahlensystem vorzugsweise mindestens ein Analysegerät zur Erzeugung der Vorab-Analysebilder und der Prozess-Analysebilder. Die Analysebilddaten, die die Analysebilder darstellen werden vorzugsweise von dem Analysegerät dem Computer (z.B. über eine Schnittstelle) zugeführt, der diese dann gemäß dem erfindungsgemäßen Programm verarbeitet. Weiter umfasst das Behandlungssystem vorzugsweise eine Benutzerschnittstelle, wie insbesondere einen Bildschirm, Tastatur und/oder Maus, die es einem Benutzer erlauben, Vorab-Regionen zu bestimmen und/oder Bewegungsdaten einzugeben, wobei der Computer insbesondere ausgebildet ist, die Vorab-Analysebilder hierzu am Bildschirm anzuzeigen. Das erfindungsgemäße Behandlungsstrahlensystem kann gemäß einer Ausführungsform weiter eine Detektionsvorrichtung zur Detektion der oben erwähnten Markervorrichtung umfassen. Diese Detektionsvorrichtung ist vorteilhaft Bestandteil einer integrierten Navigationsvorrichtung, die nach den Prinzipien der bildgestützten Navigation, wie Image Guided Surgery (IGS) arbeitet und insbesondere in den Computer eingegebene Analysedaten mit der Lage der detektierten Marker korreliert. Vorteilhaft umfasst das Behandlungsstrahlensystem gemäß einer weiteren Ausführungsform eine Schnittstelle zur Eingabe von Lebensfunktionsdaten, die insbesondere die Atmung und/oder den Puls betreffen.

Das Behandlungsstrahlensystem kann weiter ein Vitaldatenmessgerät umfassen, um die Vitalfunktionsdaten zu messen.
Figur 1 zeigt ein erfindungsgemäßes Behandlungsstrahlsystem;
Figur 2 zeigt ein Vorab-Röntenbild;
Figur 3 zeigt ein Prozess-Röntgenbild;
Figur 4 zeigt ein weiteres Vorab-Röntgenbild;
Figur 5 zeigt ein Prozess-Röntgenbild;
Figur 6 zeigt drei Vorab-Regionen;
Figur 7 zeigt ein Prozess-Röntgenbild;
Figur 8 zeigt Prozess-Regionen;
Figur 9 zeigt die Formänderung eines Tumors.
Figur 10 zeigt die Nutzung von Relativlagedaten.
Figur 11 zeigt die Nutzung der Prinzipien der Epipolargeometrie.

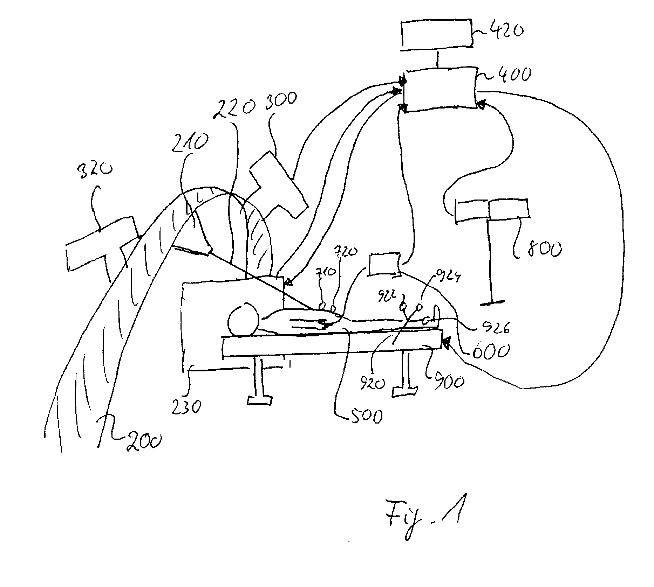

Figur 1 zeigt ein erfindungsgemäßes Behandlungsstrahlsystem. Dieses umfasst ein Behandlungsgerät 200 mit einem Behandlungsstrahlemissionsteil 210, das einen Behandlungsstrahl 220 abgibt. Am Behandlungsgerät 200 ist weiterhin in fester räumlicher Relation dazu ein Röntgengerät 300 angebracht, das ein Beispiel für ein Analysegerät darstellt. Das Röntgengerät 300 ist mit einem PC 400, der einen Monitor 420 aufweist, verbunden, um Röntgenbilddaten zu empfangen, die ein Beispiel für Analysebilddaten darstellen. Als Benutzerschnittstelle dienen beispielsweise eine Maus 411 und eine Tastatur 410. Von dem Computer 400 gehen weiterhin Steuersignale zu dem Steuergerät 230 des Behandlungsgeräts, um die Lage des Behandlungsstrahls 220 relativ zum Patienten 500 zu steuern. Der Patient 500 wird durch medizinische Monitorgeräte überwacht, wie beispielsweise einem Pulsoximeter 600, der Pulssignale zu dem Computer 400 abgibt. Weiter wird beispielsweise die Atembewegung des Patienten 500 durch Detektion von Markern 710 und 720 überwacht, die z.B. im Bereich des Abdomens am Patienten befestigt sind. Die Marker 710 und 720 werden durch eine Detektionsvorrichtung 800 detektiert, die die Detcktionssignale zu dem Computer 400 abgibt, so dass dieser die Lage der Marker 710 und 720 und insbesondere der Lageänderung berechnen kann. Der Patient liegt auf einem Tisch 900, der vorzugsweise relativ zum Behandlungsgerät beweglich ist. Der Tisch 900 weist weiter vorzugsweise eine Markervorrichtung, insbesondere einen Referenzstern 920 auf, dessen Marker 922, 924 und 926 von der Detektionsvorrichtung 800 ebenfalls detektiert werden. Die so generierten Detektionssignale werden dem Computer 400 zugeführt. Der Computer 400 berechnet dann die Lage des Referenzsterns 920. Die Relativlage zwischen dem Referenzstern 920 und den Markern 710 und 720 enthält Informationen über die Vital-Bewegungen und können als Vitalfunktionsdaten genutzt werden. Der Patient ist relativ zu der Liege 900 ortsfest gelagert. Vorab gewonnene dreidimensionale CT-Röntgenbilder können durch Röntgenbilder, die durch das Röntgengerät 300 gewonnen wurden vorzugsweise durch noch mindestens ein weiteres Röntgengerät 320 gewonnen werden in einem Bezugssystems eines Navigationssystems, das von der Detektionsvorrichtung 800 und dem Computer 400 gebildet wird nach den Prinzipien der bildgestützten Chirurgie (Image Guided Surgery) registriert werden.

Unter einer Markervorrichtung können ein einzelner, aber auch mehrere Marker verstanden werden. Aufgabe eines Markers ist, von einer Markerfassungsrichtung (z.B. einer Kamera) erfasst zu werden, so dass seine Lage (d.h. Position und/oder Ausrichtung) im Raum ermittelt werden kann. Solche Marker können aktive Marker sein. Ein aktiver Marker emittiert beispielsweise elektromagnetische Strahlung bzw. Wellen, wobei diese Strahlung im infraroten, sichtbaren und/oder ultravioletten Spektralbereich liegen kann. Der Marker kann aber auch passiv sein, d.h. beispielsweise elektromagnetische Strahlung aus dem infraroten, sichtbaren und/oder ultravioletten Spektralbereich reflektieren. Dazu kann der Marker mit einer Oberfläche versehen sein, die entsprechende Reflektionseigenschaften besitz. Es ist auch möglich, dass ein Marker elektromagnetische Strahlung bzw. Wellen reflektiert und/oder emittiert, die im Bereich der Radiofrequenzen oder bei Ultraschallwellenlängen liegt. Ein Marker besitzt vorzugsweise sphärische Form bzw. eine kugelähnliche Gestalt und kann daher als Markerkugel bezeichnet werden. Ein Referenzstern bezeichnet eine Einrichtung, an der mehrere, vorteilhaft drei Markervorrichtungen angebracht sind. Die Markervorrichtungen sind dabei ortsfest und vorteilhaft lösbar an dem Referenzstern angebracht, so dass eine bekannte relative Lage der Markervorrichtungen zueinander entsteht. Der Referenzstern dient dazu, in einem chirurgischen Navigationsverfahren eine Mehrzahl von Markervorrichtungen an einem Gegenstand (beispielsweise einem Knochen oder einem medizinischen Instrument) anzubringen, um die Lage des Gegenstandes im Raum (d.h. seine Position und/oder Ausrichtung) erfassen zu können. Ein solcher Referenzstern umfasst für gewöhnlich eine Anbringmöglichkeit an dem Gegenstand (beispielsweise eine Schelle und/oder ein Gewinde), ein Halteelement, das für einen Abstand der Markervorrichtungen von dem Gegenstand sorgt (um insbesondere die Sichtbarkeit der Markervorrichtungen für eine Markererfassungseinrichtung zu unterstützen) sowie mit dem Halteelement mechanische verbundene Markerhalter, an die die Markervorrichtungen angebracht werden können. Wo es aus dem Zusammenhang klar wird, kann der Begriff Referenzstern auch einen Referenzstern mit wenigstens einer daran angebrachten Markervorrichtung bezeichnen. Ein solches System aus einem Referenzstern und wenigstens einer Markervorrichtung kann auch Markerstern genannt werden.

Der Computer 400 bestimmt nach dem erfindungsgemäßen Verfahren die Prozess-Lage eines zu bestrahlenden Tumors basierend auf den Röntgenbilddaten der Röntgenvorrichtung 300 (oder zusätzlich auch der Röntgenvorrichtung 320). Weiter werden dem Computer 400 von dem Steuergerät 230 Daten über die relative Lage zwischen den Röntgengeräten 300 und 320 und dem Behandlungsstrahlteil 210 zugeführt, so dass dieser basierend auf der bestimmten Prozess-Lage Steuersignale bestimmen kann, die das Steuergerät 230 so steuern, dass der Behandlungsstrahl 220 den Tumor durchstrahlt. Ein Gerät, das den Behandlungsstrahl abgibt, kann beispielsweise zur Steuerung der Strahlrichtung ein Kardangelenk) und/oder einen Roboterarm aufweisen, das bzw. der durch die Steuersignale gesteuert wird.

Außerdem kann der Tisch 900 beweglich gestaltet werden, um den Patienten in eine geeignete Lage für die Bestrahlung zu verlagern. Hierzu werden ebenfalls Steuersignale von dem Computer 400 an den Tisch 900 abgegeben. Die Lage des Tisches kann über den Referenzstern 920 festgestellt werden. Insbesondere werden dem Computer Daten bereitgestellt, die die relative Lage zwischen dem Referenzstern 920 und dem ruhenden Patienten beschreiben, so dass bestimmbar ist welche Region des Patientenkörpers 500 durch den Behandlungsstrahl 220 durchstrahlt wird. Dies kann insbesondere durch die Bestimmung der Lage eines dreidimensionalen Röntgenbildes ergänzt werden, um so den Behandlungsstrahl auf den Tumor auszurichten. Abweichungen von dieser Ausrichtung können dann durch die Röntgengeräte 300 und 320, die vorzugsweise in einer Frequenz im Sekundenbereich Aufnahmen schießen, erkannt werden. Durch die bekannte Lage des Patienten relativ zur Abbildungsgeometrie des Röntgengeräts ist es möglich, zu bestimmten, welcher Körperbereich von den Röntgengeräten 300 und 320 erfasst werden. Die Detektion der Marker 710 und 720 durch die Detektionsvorrichtung 800 erlaubt die Erfassung einer Atembewegung, die dann ebenfalls bei der Bestimmung der Lage des Tumors (der Prozess-Region, die den Tumor darstellt), genutzt werden kann.

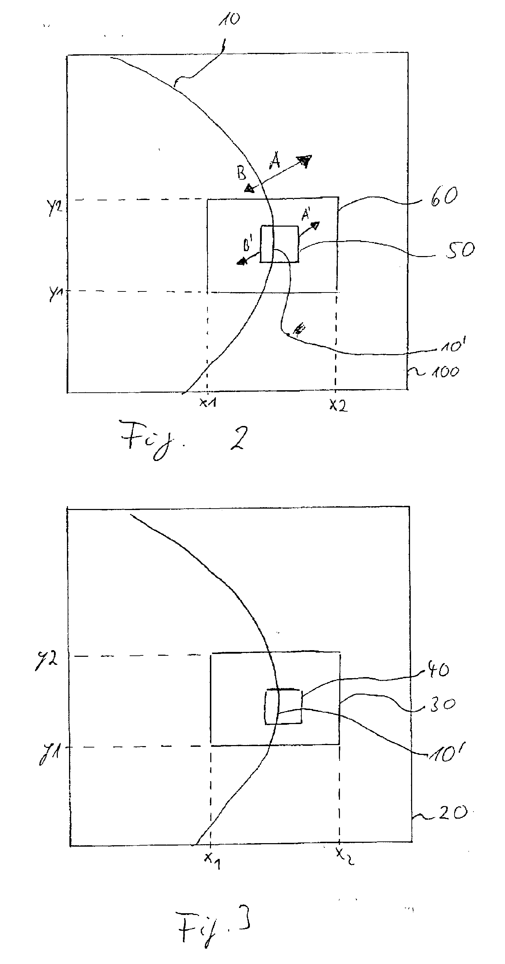

Figur 2 zeigt ein Vorab-Röntenbild, wie es beispielsweise auf dem Monitor 420 (siehe Figur 1) dargestellt wird. Das Vorab-Röntgenbild 100 zeigt die Kontur eines Zwerchfells 10, eine Vorab-Region 50 und ein Vorab-Subbild 60. Die Vorab-Region 50 enthält als Körperelement einen Abschnitt 10' des Körperteils 10. Der Abschnitt 10' bewegt sich zusammen mit dem Zwerchfell 10 aufgrund der Atmung des Patienten. Der Abschnitt 10' stellt somit ein vital-bewegtes Körperelement dar, das durch die Vorab-Region 50 dargestellt wird. Das Zwerchfell bewegt sich in die Richtungen A und B aufgrund der Atmung des Patienten. Entsprechend verlagert sich die Vorab-Region 50 in die Richtungen A' oder B' wenn Vorab-Röntgenbilder zu einem anderen Zeitpunkt gewonnen werden. Die Anordnung des erfindungsgemäßen Behandlungsstrahlssystems ist vorzugsweise so gewählt, dass der Patient ruhig liegt, während die Röntgenaufnahmen gewonnen werden und insbesondere auch seine Lage beibehält, wenn die Behandlung mit dem Behandlungsstrahl durchgeführt wird. Nicht unterdrückt werden können die Vital-Bewegungen, die erfindungsgemäß berücksichtigt werden sollen. Den Bereich, den das Vorab-Subbild 60 im Vorab-Röntenbild 100 einnimmt, wird beispielsweise durch die Koordinaten x1, x2, y1 und y2 beschrieben. Bei diesen Koordinaten handelt sich beispielsweise um Pixelkoordinaten des Röntgenbildes. Diese Koordinaten stellen ein Beispiel für Subbild-Definitionsdaten dar. Die Lage und Größe des Vorab-Subbilds kann interaktiv von einem Benutzer, beispielsweise Arzt am Bildschirm geändert werden. Hierbei beobachtet der Arzt vorzugsweise eine Folge von Vorab-Röntgenbildern, in denen sich vorzugsweise zumindest ein vollständiger Zyklus einer Vital-Bewegung zeigt. Auf diese Art und Weise kann das Vorab-Subbild so groß gewählt werden, dass das Körperelement 10' und die jeweilig diese enthaltende Vorab-Region 50 in dem Vorab-Subbild 60 enthalten ist. Die Subbild-Delinitionsdaten werden dann genutzt, um einen Bestimmungsbereich festzulegen, wie dies in Figur 3 gezeigt ist. Figur 3 zeigt ein Prozess-Röntgenbild 20. Das Prozess-Subbild 30 wird durch die Koordinaten x1, x2, y1 und y2 festgelegt, also durch die Subbild-Definitionsdaten. Innerhalb des Prozess-Subbildes 30 wird dann erfindungsgemäß nach einer Prozess-Region 40 gesucht, die im Prozcss-Röngenbild eine andere Lage einnehmen kann als die Vorab-Region 50 im Vorab-Röntgenbild. Die Prozess-Region hat eine Ähnlichkeit zu der Vorab-Region 50, die größer als ein vorbestimmter Schwellenwert eins Ähnlichkeilsmaßes ist und stellt dasselbe Körperelement 10' dar. Durch die Festlegung eines Prozess-Subbildes 30 ist der Bestimmungsbereich kleiner als das Vorab-Röntgenbild 100. Somit kann das Auffinden der Prozess-Region 40 erheblich gegenüber der Situation beschleunigt werden, bei der das gesamte Prozess-Röntgenbild 20 nach einer Prozess-Region 40 durchsucht wird, die zu der Vorab-Region 50 (zumindest in einem vorbestimmten Umfang) ähnlich ist.

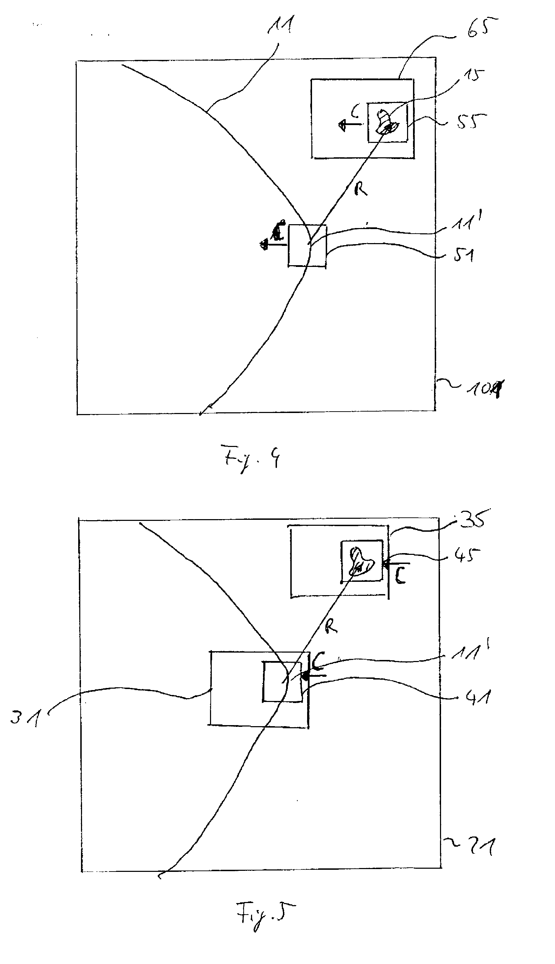

Figur 4 zeigt ein weiteres Vorab-Röntgenbild 101 mit einer Vorab-Region 51. Neben dieser Vorab-Region 51 gibt es eine weitere Vorab-Region 55, die einen Tumor 15 darstellt. Die Vorab-Region 51 stellt einen Abschnitt 11' des Zwerchfells 11 dar. Es wird angenommen, dass der Rand des Zwerchfells 11, insbesondere des Abschnittes 11' kontrastreich im Röntgenbild 101 erkennbar ist, während der Tumor 15 nur einen schwachen Kontrastunterschied zur Umgebung aufweist. Anders ausgedrückt, der Abschnitt 11' ist leichter im Vorab-Röntgenbild 101 zu identifizieren als der Tumor 15. Weiter wird angenommen, dass der Tumor 15 dieselben Vital-Bewegungen durchläuft, wie der Abschnitt 11'. Gemäß einer Ausführungsform der Erfindung, die mit den anderen Ausführungsformen kombiniert werden kann, wird in einem Prozess-Röntgenbild 21 (siehe Figur 5) eine Prozess-Region 41 bestimmt, die der Vorab-Region 51 ähnelt. Die Vorab-Region 41 hat also beispielsweise ein bestimmtes Ähnlichkeitsmaß zur Vorab-Region 51, die eine vorbestimmte Ähnlichkeitsmaß-Quelle überschreitet. Das Bestimmen der Vorab-Region 41 ist aufgrund der höheren Kontrastverhältnisse mit größerer Sicherheit durchzuführen, als die Bestimmung einer Prozess-Region 45, die der Vorab-Region 55 entspricht, die ihr also in einem vorbestimmten Umfang ähnelt. Die Lagen der Vorab-Regionen 51 und 55 in Verbindung mit der bestimmten Lage der Prozess-Region 41 stellen Bewegungsdaten dar, die die Bestimmung der Lage (Prozcss-Lage) der Prozess-Region 45 ermöglichen. Die Lageänderung des Körperelements 11' vom Vorab-Röntgenbild 101 zu dem Prozess-Röntenbild 21 ist die Folge einer Vital-Bewegung. Diese Vital-Bewegung entspricht einer Verlagerung der das Körperelement 11 darstellenden Region (Vorab-Region 51 und Prozess-Region 41), die in Figur 4 und 5 mit einem Pfeil dargestellt ist. Die Vorab-Region 51 umschreibt somit einen anderen Koordinatenbereich in dem Vorab-Röntgenbild 101, als die Prozess-Region 41 in dem Prozess-Röntgenbild 21. Diese Änderung der Vorab-Lage der Vorab-Region 51 zu der Prozess-Lage der Prozess-Region 41 wird durch den Vektor C in Figur 4 und 5 beschrieben. Die Prozess-Lage 45 lässt sich somit aus der Vorab-Lage der Vorab-Region 55 bestimmten, indem diese um einen Vektor C verschoben wird. Alternativ kann die Lage eines Vorab-Subbildes 65 um den Vektor C verschoben werden, um so die Lage eines Prozess-Subbildes 35 zu bestimmen. Innerhalb dieses Prozess-Subbildes 35 wird dann nach einer Prozess-Region 45 gesucht, die der Vorab-Region 55 entspricht. Gemäß einer weiteren Variante wird ein Relativvektor R im Vorab-Röntgenbild bestimmt, der die Relativlage zwischen der Vorab-Region 51 und der Vorab-Region 55 beschreibt. Die Prozess-Lage der Prozess-Region 45 wird dann basierend auf der Prozess-Lage der Prozess-Region 41 bestimmt, indem die Prozess-Lage der Prozess-Region 41 um den Vektor R verschoben wird. Entsprechend kann auch die Lage des Prozess-Subbildes 35 bestimmt werden. Hierzu wird beispielsweise die Lage des Prozess-Subbildes 31 um den Vektor R verschoben, um die Lage des Prozess-Subbildes 35 zu bestimmen. Innerhalb dieses Prozess-Subbildes erfolgt dann wiederum die Bestimmung der Prozess-Region 45 nach dem bereits erwähnten Verfahren.

Ein Vorteil des oben beschriebenen Verfahrens liegt darin, dass leichter erkennbare Regionen genutzt werden, um die Lage schwerer erkennbarer Regionen aufzufinden, die denselben Vitalbewegungen unterworfen sind. Im oben genannten Beispiel stellt die Vorab-Region 51 eine erste Vorab-Region dar und die Vorab-Region 55 eine zweite Vorab-Region. Entsprechend stellt die Prozess-Region eine erste Prozess-Region dar und die Prozess-Region 45 stellt eine zweite Prozess-Region dar.

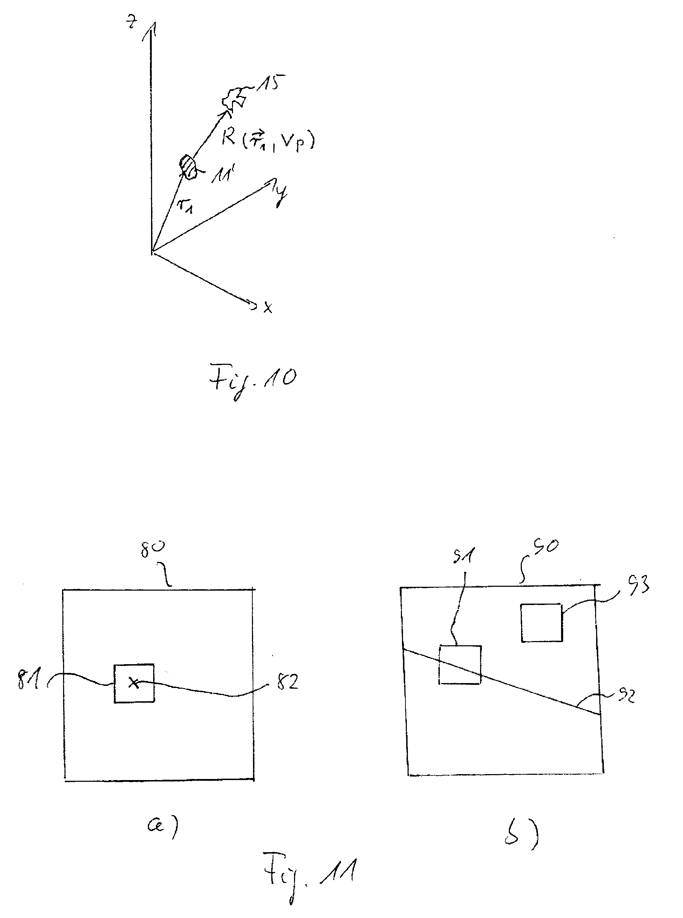

Der oben erwähnte Relativvektor R stellt ein Beispiel für Relativlagedaten dar. Im oben genannten Beispiel, wurden die Relativlagedaten im zweidimensionalen, also im Röntgenbild beschrieben. Die Relativlagedaten liegen dabei insbesondere dreidimensional vor. Diese dreidimensionalen Relativlagedaten können insbesondere mithilfe eines vierdimensionalen CT gewonnen werden, wie bereits oben erläutert worden ist. Die Relativlagedaten R sind insbesondere eine Funktion von Vitalparametern und/oder der Lage der Vorab-Region. In Figur 10 ist beispielhaft die Lage zweier Regionen 11' und 15 im dreidimensionalen Raum dargestellt. Die Lagedaten der Körperelemente 11' und 15 können beispielsweise durch die gezeigten Koordinaten x, y und z beschrieben werden. Das vital-bewegte Körperelement 11' hat eine durch einen Vektor R beschreibbare Relativlage relativ zum vital-bewegten Körperelement 15. Entsprechend dem Beispiel der Figur 4 und 5 soll es sich bei dem vital-bewegtcn Körperelement 11' um das erste vital-bewegte Körperelement handeln, das im Analysebild (Röntgenbild) leicht erkennbar ist. Das vital-bewegte Körperelement 15 soll im Röntgenbild schwer erkennbar sein, aber im dreidimensionalen CT (oder vierdimensionalen CT) durchaus erkennbar sein. Die in Figur 10 gezeigten vital-bcwegten Körperelemente 11' und 15 sollen sich aus den dreidimensionalen oder vierdimensionalen CT-Daten ergeben. Der Vektor R kann eine Funktion von r₁ und/oder Vp sein. Der Vektor r₁ beschreibt die Lage des vital-bewegten Körperelements 11'. Der Vitalparameter Vb kann beispielsweise die Amplitude der Atmung und/oder des Herzschlages sein. Bei bekannter Abbildungsgeometrie können die Lagen der Körperelemente 11' und/oder des Körperelements 15 so umgerechnet werden, dass man beispielsweise das Körperelement 15 in der in Figur 4 und/oder 5 gezeigten Situation anzeigen kann. Man kann also berechnen, welche Lage das im Röntgenbild schwer erkennbare Körperelement 15 im Röntgenbild einnehmen würde. Auf diese Art und Weise kann man die im Zusammenhang mit Figur 4 und 5 beschriebenen Verfahren auch dann anwenden, wenn im Röntgenbild das vital-bewegte Körperelement 15 nicht identifzierbar ist. Alternativ kann so vorgegangen werden, dass aus der Lage des vital-bewegten Körperelements 11' im Röntgenbild (siehe Figur 4 oder 5) der Vektor r₁ im dreidimensionalen Raum bestimmt wird. Dies kann insbesondere dann erfolgen, wenn zwei Analysebilder aus unterschiedlichen Richtungen vom Patienten gewonnen werden. Hierzu wird nochmals auf die bereits oben zitierten Anmeldungen verwiesen, die es erlauben aus zweidimensionalen Röntgenbildern unterschiedlicher Aufnahmerichtung die Lage im dreidimensionalen Raum zu bestimmen. Alternativ kann auch von einem Bediener die Information eingegeben werden, welche Lage das im Röntgenbild gezeigte vital-bewegte Körperelement 11' im vorab gewonnenen dreidimensionalen Analysebild (dreidimensionales CT oder vierdimensionales CT) einnimmt. Ist somit der Vektor r₁ bestimmt, kann dann basierend auf den dreidimensionalen oder vierdimensionalen Röntgenbilddaten (Analysebilddaten) der Vektor R bestimmt werden. Die Genauigkeit der Bestimmung des Vektors R kann erhöht werden, indem die vorgenannten Parameter r₁ und/oder Vp genutzt werden, also R(r₁, Vp) gilt. Der Vektor R stellt ein Beispiel für die bereitgestellten Relativlagedaten dar.

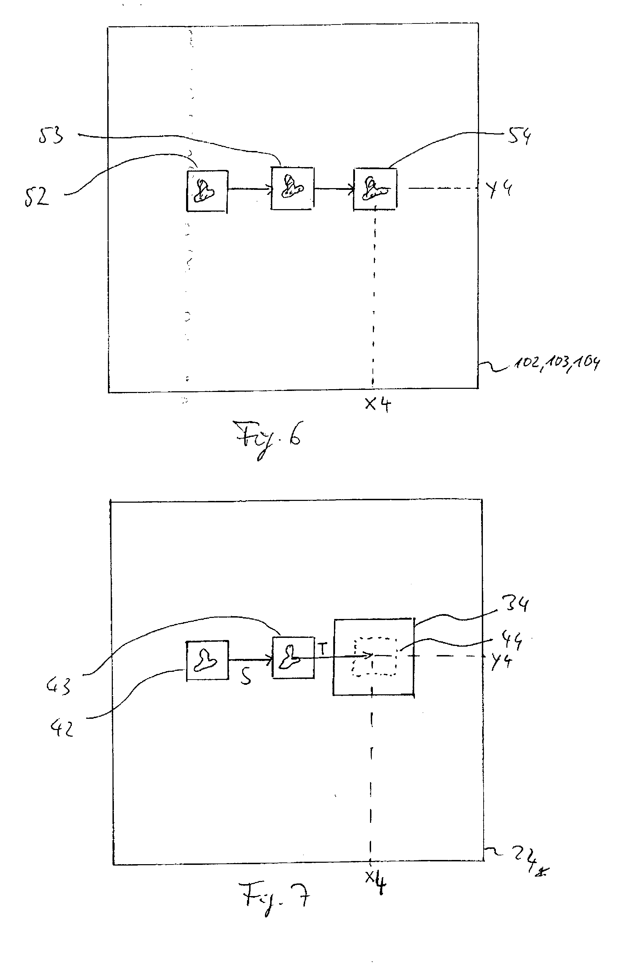

Figur 6 zeigt drei Vorab-Regionen 52, 53 und 54, die in verschiedenen Röntgenbildern 102, 103 und 104 bestimmt wurden und die jeweils dasselbe Körperelement zeigen. Die drei Vorab-Röntgenbilder 102, 103, 104 sind nicht separat gezeigt sondern als einziges Bild, in dem die Vorab-Regionen 52, 53 und 54 drei verschiedene Lagen einnehmen. Tatsächlich wurden die Vorab-Regionen 52, 53 and 54 jedoch nacheinander gewonnen (z.B. im Sekundenabstand). Die drei Vorab-Regionen entsprechen einander und nehmen drei verschiedene Vorab-Lagen in den drei Vorab-Röntgenbildern 102, 103 und 104 ein. Die Beschreibung der Lage der Bereiche der Vorab-Regionen 53 und 54 (z.B. durch die oben erwähnten Pixelkoordinaten) stellen Sequenzdaten dar, die eine Abfolge von Vorab-Regionen 53 und 54 beschreiben. Die Vorab-Region 52 ist Bestandteil der Vorab-Analysebilddaten. Die Lage derVorab-Region 52 zusammen mit den Lagen der Vorab-Regionen 53 und 54 stellen ebenfalls Sequenzdaten dar. Die Sequenzdaten bilden ebenfalls ein Beispiel für die Bewegungsdaten, die Informationen über die Vital-Bewegungen der Körperelemente darstellen. Diese Sequenzdaten legen einen Bestimmungsbereich für das gegenwärtige Prozess-Röntgenbild fest. Figur 7 zeigt ein Prozess-Röntgenbild 24, in dem Prozcss-Regionen 42 und 43 früherer (nicht gezeigter) Röntgenbilder 22 und 23 eingezeichnet sind. Aus einem Vergleich der in Figur 6 gezeigten Vorab-Lagen der Vorab-Regionen 52 und 53 mit den Prozess-Lagen der Prozess-Regionen 42 und 43 erkennt man, dass sich entsprechen. Es ist somit zu erwarten, dass die gegenwärtige Prozess-Lage einer noch zu bestimmenden Prozess-Region 44 (in Figur 7 gestrichelt gezeichnet) im Prozess-Röntgenbild 24 eine ähnliche Lage einnimmt wie die Vorab-Region 54 in dem Vorab-Röntgenbild 104. Gemäß einer Ausführungsform wird deshalb der Bestimmungsbereich zum Bestimmen der Prozess-Region 44 so gelegt, dass er einen Bereich umfasst, der der Lage der Vorab-Region 54 in dem Vorab-Röntgenbild 104 entspricht. Beispielsweise wird dieser Bestimmungsbereich 34 so gelegt, dass sein Mittelpunkt die Koordinaten x4 und y4 hat. Diese Koordinaten x4 und y4 entsprechen den Koordinaten des Mittelpunkts der Vorab-Rcgion 54. Die Größe des Bestimmungsbereichs 34 kann dann beispielsweise so gewählt werden, dass er doppelt so groß ist, wie die Vorab-Region 54 oder die festzustellende Prozess-Region 44. Innerhalb des Bestimmungsbereichs 34 wird dann nach der Prozess-Region 44 gesucht, die der Vorab-Region 54 zumindest in einem vorbestimmten Umfang ähnelt.

Alternativ oder zusätzlich zu den oben beschriebenen Möglichkeiten zur Bestimmung der gegenwärtigen Prozess-Lage oder des Bestimmungsbereichs kann auch wie folgt vorgegangen werden. Wie in Figur 7 gezeigt ist, wurden bereits die Prozess-Lagen der Prozess-Regionen 42 und 43 in den beiden vorhergehenden Bestimmungsverfahren bestimmt. Geht man von der Annahme einer stetigen Vital-Bewegung aus, so ist zu erwarten, dass die gegenwärtige Prozess-Region 44 in der Richtung des Vektors S ausgehend von der Lage der Prozess-Region 43 versetzt ist. Weiter kann man die Annahme treffen, dass der Umfang der Bewegung gleich geblieben ist, dass also die Länge des die Verlagerung beschreibenden Vektors gleich der Länge des Vektors S ist. Es wird also die gegenwärtige Prozess-Region bei dem gestrichelt gezeigten Bereich 44 in Figur 7 vermutet. Entsprechend kann dann ebenfalls, wie bereits oben erläutert wurde, der Bestimmungsbereich 34 so gewählt werden, dass er diesen vermuteten Bereich 44 umfasst.

Die oben beschriebene Annahme einer stetigen Bewegung, um dem Bestimmungsbercich einer Prozess-Region einzuschränken, kann man auch mit Vitalfunktionsdaten korrelieren. Die Vitalfunktionsdaten beschreiben beispielsweise den Puls oder die Atmung des Patienten. Beispielsweise beschreiben sie, ob der Patient gerade einatmet oder ausatmet. So genannte Korrelationsdaten korrelieren die Vitalfunktionsdaten mit den Vorab-Lagen. Weiß man beispielsweise, dass die Vorab-Region 42 gewonnen wurde, als der Patient eingeatmet hat und dass die Vorab-Region 43 gewonnen wurde, als der Patient weiter eingeatmet hat, so hat man Korrelationsdaten. Jeder der Vorab-Lagen kann der Zustand "Einatmen" (oder genauer die Amplitude des Atmungszyklus) zugeordnet werden und man erhält so Korrelationsdaten. Letztendlich weiß man auch welchen Atmungszustand der Patient gegenwärtig hat, also bei der Bestimmung des gegenwärtigen Röntgenbildes. Wird der Einatmungsprozess fortgesetzt, so ist dies ein Hinweis darauf, dass die Vital-Bewegung die Bewegungsrichtung fortgesetzt hat. Man kann also mit hoher Sicherheit erwarten, dass die Prozess-Region 44 relativ zur bcreits bestimmten Prozess-Region 43 verlagert ist, und zwar in eine Richtung, die in Figur 7 mit dem Vektor S bezeichnet ist. Dies kann man nutzen, um den Bestimmungsbereich 34 festzulegen. Geben die Vitaldaten auch die Amplitude des Atmens an, so kann man die Amplitudc noch mit dem Umfang der Verlagerung korrelieren. Ist die Amplitudendifferenz zwischen den Zeiten der Gewinnung des Prozess-Röntgenbilds 22 und 23 gleich der Amplitudendifferenz zwischen der Gewinnung des Prozess-Röntgenbilds 23 und 24, so ist davon auszugehen, dass ein Vektor T der die Verlagerung von der Mitte der Prozess-Region 43 zur Mitte der Prozess-Region 44 beschreibt, die gleiche Länge hat, wie der Vektor S. Ist die Amplitudendifferenz um einen bestimmten Faktor größer, so kann man beispielsweise davon ausgehen, dass der Vektor T um diesen Faktor länger ist als der Vektor S. Der Mittelpunkt des Bestimmungsbereichs 34 entspricht beispielsweise dann der Spitze des Vektors T, der in die gleiche Richtung zeigt wie der Vektor S und vom Mittelpunkt der zuletzt bestimmten Prozess-Region 43 ausgeht.

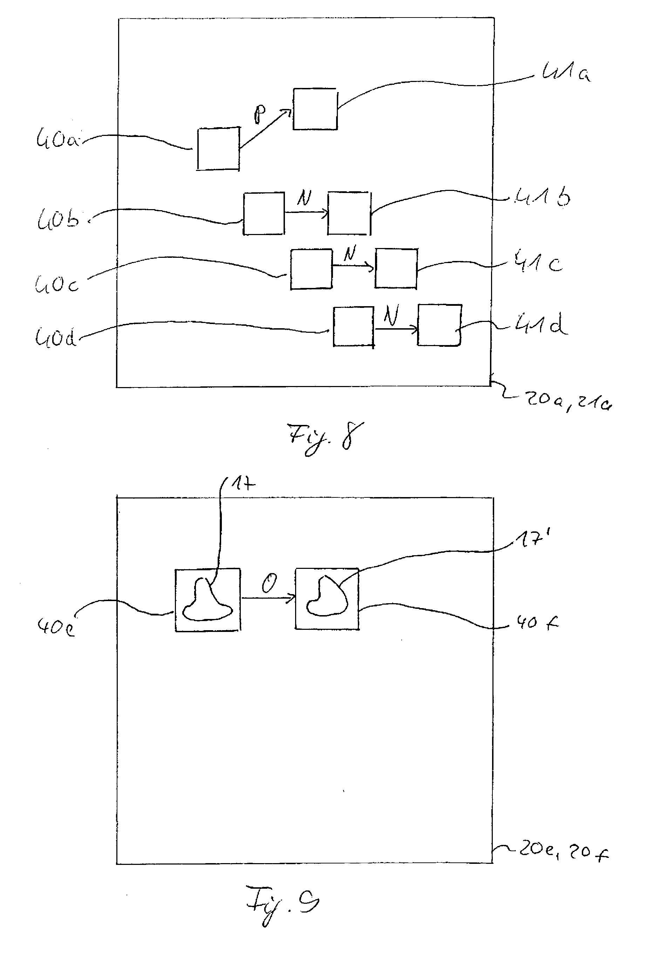

Figur 8 zeigt Prozess-Regionen, die in zwei verschiedenen Prozess-Röntgenbildern 20a und 21 a (insbesondere nacheinander) gewonnen wurden. Die Prozess-Regionen 40a, 40b, 40c und 40d wurden basierend auf dem Prozess-Röntgenbild 20a gewonnen. Die Prozess-Regionen 41a, 41b, 41c und 41d wurden basierend auf dem Prozess-Röntgenbild 21a gewonnen. Wie man in der Figur 8 erkennen kann erfahren die Prozess-Regionen 40b, 40c und 40d eine Lageänderung die mit dem Vektor N bezeichnet ist, um zu der Prozess-Lage der Prozess-Regionen 41b, 41c und 41d (im Prozess-Röntgenbild 21a) zu gelangen. Davon weicht die Lageänderung P (Vektor P) ab. Dieser Vektor P beschreibt die Lageänderung der Prozess-Lage der Prozess-Region 40a zu der Prozess-Lage der Prozess-Region 41a. Bei der Beschreibung zur Figur 8 wird davon ausgegangen, dass die Prozess-Region 40a dasselbe Körperelement darstellt wie die Prozess-Region 41a und dieser zumindest in einem vorbestimmten Umfang ähnelt. Entsprechendes gilt für die Prozess-Regionen 40b und 41b sowie 40c und 41c sowie 40d und 41d. Die Lageänderung gemäß dem Vektor P weicht von der Mehrheit der Lageänderungen, die durch den Vektor N beschrieben ist, ab. Gemäß einer Ausführungsform werden die Prozess-Regionen 40a und 41 a und/oder die Lageänderung gemäß Vektor P nicht genutzt, um eine Lageänderung zu bestimmen und um insbesondere die Lage eines Bestrahlungsortes zu bestimmen. Zur Bestimmung der für die Steuerung des Behandlungsstrahles maßgeblichen Lageänderung oder der aktuellen Soll-Lage des Behandlungsstrahles, werden vorzugsweise nur diejenigen Prozess-Regionen und Prozess-Lagen herangezogen, die der Mehrheit der Lageänderungen (also der Lageänderung gemäß Vektor N) nicht widersprechen. Auch die eben genannte Ausführungsform kann mit den obigen Ausführungsformen kombiniert werden. Insbesondere kann die Lageänderung N für die in Figur 4 gezeigte Situation genutzt werden, um die aktuelle Lage der Tumorregion 15 aus der vorherigen Lage der Tumorregion zu bestimmen, d.h. der Vektor N entspricht dem Vektor C der Figur 4.

Figur 9 zeigt eine Situation, bei der ein Körperelement, insbesondere ein Tumor 17 von der Erstellung eines Röntgenbildes 20e zu der Erstellung eines Röntgenbildes 20f eine Formänderung erfährt. Vor der Verformung wird der Tumor mit dem Bezugszeichen 17 bezeichnet. Danach wird er mit dem Bezugszeichen 17' bezeichnet. Die Prozcss-Region 40e stellt den Tumor 17 im Prozess-Röntgenbild 20e dar. Die Prozess-Region 40f stellt den Tumor 17' im Prozess-Röntgenbild 20f dar. Die Vorab-Region 40f kann aufgrund der erfindungsgemäß genutzten Bewegungsdaten trotz der Verformung des Tumors bestimmt werden. Zwischen der Form des Tumors 17 und 17' ist die Ähnlichkeit noch in einem bestimmten Umfang gegeben. Die Ähnlichkeit ist geringer, als wenn sich der Tumor nicht verformt. Gemäß einer der obigen Ausführungsformen oder einer Kombination davon, kann aber dennoch die Prozess-Region 40f bestimmt werden, indem beispielsweise ein Verlagerungsvektor O (siehe Figur 9) so bestimmt wird, wie in den obigen Beispielen beispielsweise der Vektor C oder N bestimmt wurde. Auch kann ein Bestimmungsbereich basierend auf den Bewegungsdaten entsprechend eingeschränkt werden, so dass dennoch der Tumor 17' erkannt werden kann.

Bei der Bestimmung der Ähnlichkeit zwischen 17 und 17' kann auch das Prinzip des elastischen Fusionierens (auch "Morphing" genannt) genutzt werden, um zu überprüfen, ob sich die Form des Tumors 17 in die Form 17' überführen lässt. Hierzu wird auf die bereits oben zitierte Veröffentlichung hingewiesen.

Ist die Form des Tumors 17' erkannt, so kann basierend auf der Form der Querschnitt des Behandlungsstrahls und/oder das Volumen, in dem der Behandlungsstrahl seine Energie deponiert, festgelegt werden.

Figur 11 a und b erläutert die Nutzung der Prinzipien der Epipolargeometrie bei dem erfindungsgemäßen Bestimmungsverfahren an einem Beispiel.

Figur 11a soll ein Bild 80 einer Sequenz von Prozess-Bildern sein, die von einem ersten Röntgengerät unter ersten Aufnahmebedingungen, also bei einer gegebenen ersten Abbildungsgeometrie aus einer ersten Aufnahmerichtung erfolgen. Figur 11b soll ein Bild 90 aus einer zweiten Sequenz von Röntgenbildern sein, wobei die Aufnahmen aus einer zweiten Richtung unter zweiten Aufnahmebedingungen, also bei einer gegebenen zweiten Abbildungsgeometrie erfolgen, die sich von der ersten Abbildungsgeometrie unterscheidet. Die beiden Sequenzen sind zeitlich synchron, die Aufnahmen erfolgen also jeweils zeitgleich. Insbesondere erfolgt die Aufnahme des in Figur 11a gezeigten Prozess-Bildes 80 zur selben Zeit, wie die des in Figur 11b gezeigten Prozess-Bildes 90. Das erste Prozess-Bild 80 wurde beispielsweise erfindungsgemäß verarbeitet und eine Prozess-Region 81 wurde bestimmt. Die Lage der Prozess-Region 81 kann beispielsweise durch den mit "x" gekennzeichneten Mittelpunkt 82 der Prozess-Region beschrieben werden. Aus der Kenntnis der ersten und zweiten Abbildungsgeometrie lässt sich aus der Lage des Mittelpunktes 82 eine Epipolarlinie 92 im zweiten Prozessbild 90 berechnen. Dies bedeutet, dass am Mittelpunkt 82 liegende Körperelement muss nach den Prinzipien der Epipolargeometrie in dem Prozess-Bild 90 auf der Epipolarlinie 92 liegen. Diese Information kann man nun nutzen, um im Prozess-Bild 90 die Prozess-Region 91 zu bestimmen. Beispielsweise kann man einen Bestimmungsbereich anhand der Epipolarlinie 92 einschränken. Beispielsweise wird der Bestimmungsbereich kleiner als das Prozess-Bild 90 gewählt, aber so gewählt, dass er die Epipolarlinie 92 einschließt. Insbesondere wird der Bestimmungsbereich so gewählt, dass die Ränder des Bestimmungsbereiches nicht weiter als der maximale Durchmesser einer Prozess-Region von der Epipolarlinie entfernt liegen. Insbesondere wird entlang der Epipolarlinie nach der Prozess-Region 91 gesucht. Gemäß einer alternativen Variante werden im Prozess-Bild 90 Kandidaten für eine Prozess-Region bestimmt. Diese Kandidaten haben beispielsweise ein Ähnlichkeitsmaß zu der Vorab-Region, das oberhalb eines Schwellenwerts liegt. Bei dem in Figur 11 gezeigten Beispiel sind Kandidaten 91 und 93 für eine Prozess-Region gegeben. Aus diesen Kandidaten wird dann derjenige ausgewählt, der die Epipolarlinie 92 umfasst. Das Umfassen der Epipolarlinie 92 stellt somit ein Kriterium für eine Auswahl aus mehreren Kandidaten für eine Prozess-Region dar. Die Prozess-Region 91 korrespondiert somit zu der Prozess-Region 81. Die Epipolarlinie 92 kann aus einer Projektion eines Strahls auf die Projektionsebene gewonnen werden, in der das Prozess-Bild 90 liegt, wobei die Projektion entsprechend der zweiten Abbildungsgeometrie durchgeführt wird. Der Strahl, der projiziert wird, ist der Strahl von dem Mittelpunkt 82 (durch "x" gekennzeichnet) zu der Quelle der Projektion, die nach den Vorschriften der ersten Abbildungsgeometrie erfolgt. Der Strahl verläuft also von dem Mittelpunkt 82 zu der Kameraquelle, insbesondere Röntgenquelle.

Gemäß einer weiteren Variante werden derartige Prozess-Regionen nicht für das Bestimmungsverfahren und insbesondere nicht für eine darauf basierende Steuerung des Behandlungsstrahls genutzt, die nicht auf der Epipolargeometrie begründete Kriterien erfüllen. Insbesondere werden Prozess-Regionen nicht zur Steuerung herangezogen, falls der Mittelpunkt der Prozess-Region von der Epipolarlinie um mehr als 10 oder mehr als 50% des Durchmessers einer Region abweicht.

## Patentansprüche

1. Bestimmungsverfahren um die Bestimmung der Lage eines zu bestrahlenden, vital-bewegten Körperelements mittels der Bestimmung einer Region (40) eines Analysebildes zu ermöglichen, wobei die Region ein vital-bewegtes Körperelement (10'), insbesondere einen Tumor eines anatomischen Körpers darstellt und die von Analysebild zu Analysebild eine die Vitalbewegung widerspiegelnde Lageänderung durchläuft, wobei die vital-bewegten Körperelemente zu bestrahlende oder nicht zu bestrahlende Elemente des Körpers sind, die sich bedingt durch Vitalfunktionen, wie Atmung und/oder Herzschlag auch bei ansonsten bewusst ruhig gehaltenem anatomischem Körper bewegen, wobei
Vorab-Analysebilddaten bereitgestellt werden, die eine Beschreibung eines Vorab-Analysebildes (100) umfassen, das eine Vorab-Region (50) aufweist, in der ein erstes vital-bewegtes Körperelement (10') dargestellt ist,
Prozess-Analysebilddaten bereitgestellt werden, die eine Beschreibung eines Prozess-Analysebildes (20) der Körperstruktur umfassen, wobei die Prozess-Analysebilddaten eine Abfolge von Prozess-Analysebildern beschreiben und aktualisiert werden, basierend auf den Vorab-Analysebilddaten und den Prozess-Analysebilddaten in dem Prozess-Analysebild (20) eine Prozess-Region (40) automatisch bestimmt wird, die der Vorab-Region (50) entspricht und eine Prozess-Lage im Prozess-Analysebild einnimmt, wobei durch die Bestimmung der Prozess-Region die Prozess-Lage bestimmt ist, wobei
a) die Bestimmung der Prozess-Lage der aktuellen Prozess-Region auf vor der Bestimmung der Prozess-Lagen bestimmten Bewegungsdaten basiert, die Informationen über die durch die Vitalfunktionen bedingten Vital-Bewegungen der Körperelemente umfassen und/oder
b) die Bestimmung der Lage eines zweiten vital-bewegten Körperelements basierend auf der aktuellen Prozess-Lage der aktuellen Prozess-Region und über die Relativlage zwischen dem ersten und zweiten vital-bewegten Körperelement erfolgt, wobei die Relativlage in Abhängigkeit von einem aktuellen Vital-Parameter bestimmt wird.

2. Bestimmungsverfahren nach Anspruch 1, bei welchem ein Bestimmungsbereich, der einen Ausschnitt aus dem Prozess-Analysebild darstellt, basierend auf den Bewegungsdaten bestimmt wird oder durch diese beschrieben wird, wobei die Bestimmung der Prozess-Region (40) auf den Bestimmungsbereich beschränkt wird und/oder außerhalb des Bestimmungsbereiches liegende Kandidaten-Regionen für die Bestimmung als Prozess-Region ausgeschlossen werden.

3. Bestimmungsverfahren nach Anspruch 2, bei welchem die Bewegungsdaten Subbild-Definitionsdaten (x1, x2, yl, y2) umfassen, die ein Prozess-Subbild (30) als Bestimmungsbereich so definieren, dass er einem Vorab-Subbild (60) des Vorab-Analysebildes (100) entspricht, wobei Lage und Größe des Vorab-Subbildes interaktiv von einem Benutzer geändert werden können.

4. Bestimmungsverfahren nach einem der vorhergehenden Ansprüche, bei welchem das Vorab-Analysebild eine erste (51) und eine zweite (55) Vorab-Region umfassen, in denen jeweils ein erstes (11') und ein zweites (15) der vital-bewegten Körperelemente dargestellt ist und die sich jeweils in einer ersten und zweiten Vorab-Lage befindet, wobei basierend auf der ersten Vorab-Region (51) eine erste Prozess-Region (41) im Prozess-Analysebild bestimmt wird, die der ersten Vorab-Region (51) entspricht und eine erste Prozess-Lage hat,
wobei basierend auf der ersten Vorab-Lage, der zweiten Vorab-Lage und der ersten Prozess-Lage, eine Relativlage (R; C) zwischen der ersten Vorab-Lage und der zweiten Vorab-Lage und/oder zwischen der ersten Vorab-Lage und der ersten Prozeß-Lage bestimmt wird,
wobei a) eine zweite Prozess-Lage einer zweiten Prozess-Region (45), die der zweiten Vorab-Region (55) entspricht, basierend auf den Bewegungsdaten und einer Annahme bestimmt wird; oder
b) der Bestimmungsbereich (35) zum Bestimmen der zweiten Prozess-Region (45) basierend auf den Bewegungsdaten und einer Annahme, bestimmt wird, wobei die Annahme ist,
i) dass die Relativlage (R) zwischen erster (51) und zweiter (55) Vorab-Region gleich der Relativlage zwischen erster und zweiter (45) Prozess-Region ist und/oder
ii) dass die Relativlage (C) zwischen erster Vorab-Region (51) und erster Prozeß-Region (41) gleich der Relativlage (C) zwischen zweiter Vorab-Region (55) und zweiter Prozeß-Region (45) ist; und/oder
c) der Bestimmungsbereich (35) zum Bestimmen der zweiten Prozess-Region (45) basierend auf den Bewegungsdaten und den Annahmen i) oder ii) bestimmt wird und außerhalb des Bestimmungsbereichs liegende Kandidaten-Regionen für die Bestimmung als zweite Prozess-Region ausgeschlossen werden.

5. Bestimmungsverfahren nach einem der vorhergehenden Ansprüche, bei welchem die Bewegungsdaten Sequenzdaten umfassen oder bei welchem die Bewegungsdaten die Vorab-Analysebilddaten zu Sequenzdaten ergänzen, wobei die Sequenzdaten eine die Vital-Bewegung des Körperelementes widerspiegelnde Abfolge von Vorab-Regionen (52, 53, 54) in einer Abfolge von Vorab-Analysebildern (102, 103, 104) beschreiben, und ein Bestimmungsbereich, der einen Ausschnitt aus dem Prozess-Analysebild darstellt, basierend auf den Sequenzdaten bestimmt wird.

6. Bestimmungsverfahren nach Anspruch 5 , bei welchem basierend unter der Annahme, dass eine Prozess-Region (42, 43, 44), die ein bestimmtes vital-bewegtes Körperelement darstellt, von Prozess-Analysebild zu Prozess-Analysebild eine Abfolge von verschiedenen Prozess-Lagen durchläuft, die mit der Abfolge der Vorab-Lagen der Vorab-Regionen (52, 53, 54), die das bestimmte vital-bewegte Körperelement darstellen, korreliert, und basierend auf einer vorhergehend bestimmten Prozess-Lage eine vermutliche Prozess-Lage einer vermuteten Prozess-Region bestimmt wird und der Bestimmungsbereich (34) für die Bestimmung einer gegenwärtigen Prozess-Lage (44) so bestimmt wird, dass er die vermutete Prozess-Region umfasst.

7. Bestimmungsverfahren nach einem der vorhergehenden Ansprüche soweit vom Anspruch 2 abhängig, bei welchem Vitalfunktions-Daten eingegeben werden, die zumindest einen bei der Erstellung des gegenwärtigen Prozess-Analysebildes gegebenen Vital-Parameter beschreiben,
wobei
basierend auf dem zumindest einen gegebenen Vital-Parameter eine vermutete Lage des Prozess-Regionsbildes im gegenwärtigen Prozess-Analysebild bestimmt wird,
und i) basierend auf der vermuteten Lage der Bestimmungsbereich zur Bestimmung der Prozess-Region im gegenwärtigen Prozess-Analysebild bestimmt wird und/oder ii) Kandidaten für die gegenwärtige Prozess-Region, die nicht mit der Vermutung übereinstimmen, ausgeschlossen werden.

8. Bestimmungsverfahren nach einem der vorhergehenden Ansprüche, bei welchem Vitalfunktions-Daten eingegeben werden, die zumindest einen bei der Erstellung des gegenwärtigen Prozess-Analysebildes gegebenen Vital-Parameter beschreiben, wobei die Relativlagedaten in Abhängigkeit von
i) zumindest einem Vital-Parameter und/oder
ii) der Prozess-Lage bereitgestellt werden
und die Relativlage zwischen dem ersten und zweiten Körperelement für den
i) gegebenen Vital-Parameter und/oder
ii) der gegebenen Prozess-Lage bestimmt wird,
wobei die Lage des zweiten vital-bewegten Körperelements basierend auf der bestimmten Relativlage bestimmt wird.

9. Bestimmungsverfahren nach einem der vorhergehenden Ansprüche, bei welchem basierend auf den Prozess-Lagen bereits bestimmter Prozess-Regionen, die dasselbe vital-bewegte Körperteil darstellen, eine vermutliche Prozess-Lage der gegenwärtig zu bestimmenden Prozess-Regionen unter der Annahme einer stetigen Bewegung des vital-bewegten Körperteils bestimmt wird.

10. Bestimmungsverfahren nach einem der vorhergehenden Ansprüche, bei welchem jeweils mehrere frühere Prozess-Regionen (40a, 40b, 40c, 40d, 41a, 41b, 41c, 41d) in früheren Prozess-Analysebildern (20a, 21a) bestimmt wurden, die jeweils ein anderes der vital-bewegten Körperelemente darstellen, und bei welchem bei der Bestimmung der gegenwärtigen Prozess-Regionen, die dieselben vital-bewegten Körperelemente darstellen wie die früheren Prozess-Regionen, diejenigen von einer Bestimmung der Prozess-Lagen ausgeschlossen werden, die eine im Vergleich zur Mehrheit (N) abweichende Bewegungsrichtung (P) der vital-bewegten Körperelemente implizieren.

11. Bestimmungsverfahren nach einem der vorhergehenden Ansprüche, bei welchem a) die Prozess-Analysebilddaten die Beschreibung zweier Prozess-Analysebilder umfassen, die zur selben Zeit aber unter verschiedenen Aufnahmerichtungen gewonnen wurden, und wobei die Prozess-Lage, die auf der Basis einer der zwei Prozess-Analysebilder gewonnen wurde, genutzt wird, um basierend auf Abbildungsdaten, die zumindest Information über die verschiedenen Abbildungsrichtungen umfassen, die Prozess-Region im anderen der zwei Prozess-Analysebilder zu bestimmen oder eine Bestimmung der Prozess-Region im anderen der zwei Prozess-Analysebilder zu überprüfen und/oder
b) zur Bestimmung der Prozess-Region die Differenz des gegenwärtigen Prozess-Analysebildes und zumindest eines früheren Prozess-Analysebildes bestimmt wird, wobei basierend auf der Differenz der Bestimmungsbereich bestimmt wird.

12. Bestimmungsverfahren nach einem der vorhergehenden Ansprüche, bei welchem unterer mehreren bereitgestellten Vorab-Regionen ein Teil ausgewählt wird, der der Bestimmung der Prozess-Regionen zu Grund gelegt werden soll, wobei die Auswahl auf einer Bildeigenschaft der Vorab-Regionen beruht, bei der es sich um Kontrast, Dynamikumfang, Komprimierbarkeit oder Bildenergie handelt, wobei die Komprimierbarkeit durch den Datenumfang beschrieben wird, der sich nach verlustfreier Kompression ergibt.

13. Verfahren nach einem der vorhergehenden Ansprüche, bei welchem basierend auf den bestimmten Prozess-Lagen,
auf der bekannten Lage des anatomischen Körpers relativ zu dem Behandlungsstrahl und auf der bekannten Lage der Analysestrahlen-Abbildungsgeometrie relativ zum Behandlungsstrahl
Steuerdaten zur Bestimmung der Lage des Behandlungsstrahls relativ zum anatomischen Körper bestimmt werden, wobei basierend auf den Prozess-Regionen die aktuelle Kontur (17') eines abgeschlossenen vital-bewegten Körperelements, bestimmt wird und die Steuerdaten Konturdaten umfassen, die diese Kontur beschreiben.

14. Programm, das, wenn es in einen Computer geladen wird oder auf einem Computer läuft, den Computer veranlasst das Verfahren nach einem der vorhergehenden Ansprüche auszuführen.

15. Programmspeicher, auf dem das Programm nach Anspruch 14 gespeichert ist oder Signalwelle, die Informationen trägt, die das Programm nach Anspruch 14 darstellen.

16. Behandlungsstrahlsystem mit
einem Behandlungsgerät (200), das ausgebildet ist einen Behandlungsstrahl (220) abzugeben und das eine Steuergerät (230) zur Steuerung der Lage des Behandlungsstrahles (220) umfasst,
mit einer Datenverarbeitungsvorrichtung, die einen Computer (400), auf dem das Programm nach Anspruch 14 geladen ist oder läuft, Daten-Schnittstellen, eine Benutzer-Schnittstelle und einen Bildschirm (420) aufweist,
mit einem Analysegerät (300, 320) zur Erzeugung der Vorab-Analysebilddaten und der Prozess-Analysebilddaten, die über die Daten-Schnittstellen dem Computer zugeführt werden,
wobei die Benutzerschnittstelle so ausgebildet ist, dass sie die Bezeichnung der Vorab-Regionen und der Bewegungsdaten oder von Daten, basierend auf denen die Bewegungsdaten bestimmbar sind, durch einen Benutzer erlaubt.

## Claims

1. A determining method for allowing determining the position of a vitally moved body element to be irradiated by means of the determination of a region (40) of an analysis image, wherein the region represents a vitally moved body element (10'), in particular a tumor of an anatomic body, and passes through a position variation reflecting the vital movement from one analysis image to the next analysis image, wherein the vitally moved body elements are elements of the body to be irradiated or not to be irradiated which move as a result of vital functions such as respiration and/or heartbeat also with the anatomic body otherwise consciously kept still, wherein
pre-analysis image data is provided which includes a description of a pre-analysis image (100) which has a pre-region (50) in which a first vitally moved body element (10') is presented,
process analysis image data is provided which includes a description of a process analysis image (20) of the body structure, wherein the process analysis image data describes a sequence of process analysis images and is updated,
based on the pre-analysis image data and the process analysis image data, a process region (40) is automatically determined in the process analysis image (20) which corresponds to the pre-region (50) and assumes a process position in the process analysis image, wherein the process position is determined by the determination of the process region, wherein
a) the determination of the process position of the current process region is based on movement data determined before the determination of the process positions which includes information about the vital movements of the body elements induced by the vital functions, and/or
b) the determination of the position of a second vitally moved body element is effected based on the current process position of the current process region and via the relative position between the first and the second vitally moved body element, wherein the relative position is determined depending on a current vital parameter.

2. The determining method according to claim 1, in which a determination area representing a section from the process analysis image is determined based on the movement data or described by it, wherein the determination of the process region (40) is restricted to the determination area and/or candidate regions located outside of the determination area are excluded for the determination as the process region.

3. The determining method according to claim 2, in which the movement data includes sub-image definition data (x1, x2, y1, y2) which defines a process sub-image (30) as the determination area such that it corresponds to a pre-sub-image (60) of the pre-analysis image (100), wherein the position and size of the pre-sub-image can be interactively altered by a user.

4. The determining method according to any one of the preceding claims, in which the pre-analysis image includes a first (51) and a second (55) pre-region, in which a first one (11') and a second one (15) of the vitally moved body elements is respectively depicted, and which is respectively in a first and second pre-position, wherein a first process region (41) is determined in the process analysis image based on the first pre-region (51) which corresponds to the first pre-region (51) and has a first process position,
wherein a relative position (R; C) between the first pre-position and the second pre-position and/or between the first pre-position and the first process position is determined based on the first pre-position, the second pre-position and the first process position,
wherein a) a second process position of a second process region (45) corresponding to the second pre-region (55) is determined based on the movement data and an assumption; or
b) the determination area (35) for determining the second process region (45) is determined based on the movement data and an assumption, wherein the assumption is
i) that the relative position (R) between first (51) and second (55) pre-region is equal to the relative position between first and second (45) process region, and/or
ii) that the relative position (C) between first pre-region (51) and first process region (41) is equal to the relative position (C) between second pre-region (55) and second process region (45); and/or
c) the determination area (35) for determining the second process region (45) is determined based on the movement data and the assumptions i) or ii) and candidate regions located outside of the determination area are excluded for the determination as the second process region.

5. The determining method according to any one of the preceding claims, in which the movement data includes sequence data or in which the movement data supplement the pre-analysis image data to sequence data, wherein the sequence data describes a sequence of pre-regions (52, 53, 54) reflecting the vital movement of the body element in a sequence of pre-analysis images (102, 103, 104), and a determination area representing a section from the process analysis image is determined based on the sequence data.

6. The determining method according to claim 5, in which based on the assumption that a process region (42, 43, 44) representing a certain vitally moved body element passes through a sequence of various process positions from process analysis image to process analysis image which correlates with the sequence of the pre-positions of the pre-regions (52, 53, 54) representing the certain vitally moved body element, and based on a previously determined process position, a presumable process position of a supposed process region is determined and the determination area (34) for determining a present process position (44) is determined such that it includes the supposed process region.

7. The determining method according to any one of the preceding claims as far as depending on claim 2, in which vital function data is input which describes at least one vital parameter given in creating the present process analysis image,
wherein
based on the at least one given vital parameter, a supposed position of the process region image in the present process analysis image is determined,
and i) based on the supposed position, the determination area for determining the process region in the present process analysis image is determined, and/or ii) candidates for the present process region which do not correspond to the assumption, are excluded.

8. The determining method according to any one of the preceding claims, in which vital function data is input which describes at least one vital parameter given in creating the present process analysis image, wherein the relative position data is provided depending on
i) at least one vital parameter, and/or
ii) the process position,
and the relative position between the first and the second body element is determined for
i) the given vital parameter, and/or
ii) the given process position,
wherein the position of the second vitally moved body element is determined based on the determined relative position.

9. The determining method according to any one of the preceding claims, in which based on the process positions of already determined process regions which represent the same vitally moved body part, a supposed process position of the process regions presently to be determined is determined assuming a consistent movement of the vitally moved body part.

10. The determining method according to any one of the preceding claims, in which multiple prior process regions (40a, 40b, 40c, 40d, 41 a, 41 b, 41 c, 41 d) each have been determined in prior process analysis images (20a, 21 a) which each present another one of the vitally moved body elements, and in which in determining the present process regions presenting the same vitally moved body elements as the prior process regions, those are excluded from a determination of the process positions which imply a direction of movement (P) of the vitally moved body elements deviating compared to the majority (N).

11. The determining method according to any one of the preceding claims, in which a) the process analysis image data includes the description of two process analysis images which have been extracted at the same time but with different capturing directions, and wherein the process position extracted based on one of the two process analysis images is used to determine the process region in the other one of the two process analysis images or to check a determination of the process region in the other one of the two process analysis images based on image data including at least information about the different imaging directions, and/or
b) for determining the process region, the difference of the present process analysis image and at least one prior process analysis image is determined, wherein the determination area is determined based on the difference.

12. The determining method according to any one of the preceding claims, in which a part is selected among several provided pre-regions which is to be taken as a basis for determining the process regions, wherein the selection is based on an image characteristic of the pre-regions which is contrast, dynamic range, compressibility or image energy, wherein the compressibility is described by the data volume which results after lossless compression.

13. The method according to any one of the preceding claims, in which based on the determined process positions,
on the known position of the anatomic body relative to the treatment ray and on the known position of the analysis ray imaging geometry relative to the treatment ray,
control data for determining the position of the treatment ray relative to the anatomic body is determined, wherein based on the process regions, the current contour (17') of a completed vitally moved body element is determined and the control data includes contour data describing this contour.

14. A program which, if it is loaded in a computer or running on a computer, causes the computer to execute the method according to any one of the preceding claims.

15. A program memory, on which the program according to claim 14 is stored, or signal wave carrying information representing the program according to claim 14.

16. A treatment ray system including
a treatment apparatus (200) formed to output a treatment ray (220) and including a controller (230) for controlling the position of the treatment ray (220),
comprising a data processing device having a computer (400), on which the program according to claim 14 is loaded or runs, data interfaces, a user interface and a screen (420), and
comprising an analysis apparatus (300, 320) for generating the pre-analysis image data and the process analysis image data supplied to the computer via the data interfaces,
wherein the user interface is formed such that it allows the designation of the pre-regions and the movement data or data, based on which the movement data can be determined, by a user.

## Revendications

1. Méthode de détermination pour rendre possible la détermination de la position d'un élément corporel soumis à un mouvement vital à irradier au moyen de la détermination d'une région (40) d'une image d'analyse, la région représentant un élément corporel (10') soumis à un mouvement vital, notamment une tumeur d'un corps anatomique et qui, d'image d'analyse en image d'analyse, subit un changement de position reflétant le mouvement vital, les éléments corporels soumis à un mouvement vital étant des éléments du corps devant être irradiés ou ne devant pas être irradiés qui sont en mouvement en raison de fonctions vitales telles que la respiration et/ou la pulsation cardiaque même quand le corps anatomique est consciemment maintenu au repos, où
des données d'une pré-image d'analyse sont mises à disposition, qui comprennent une description d'une pré-image d'analyse (100) comportant une pré-région (50) dans laquelle est représentée un premier élément corporel (10') soumis à un mouvement vital,
des données d'image d'analyse de processus sont mises à disposition, qui comprennent une description d'une image d'analyse de processus (20) de la structure corporelle, les données d'image d'analyse de processus décrivant une suite d'images d'analyse de processus et étant actualisées,
une région de processus (40), qui correspond à la pré-région (50) et occupe une position de processus dans l'image d'analyse de processus, est déterminée automatiquement dans l'image d'analyse de processus (20) à partir des données de pré-image d'analyse et des données d'image d'analyse de processus,
où la position de processus est déterminée par la détermination de la région de processus,
où
a) la détermination de la position de processus de la région de processus actuelle est basée sur des données de mouvement déterminées avant la détermination des positions de processus qui comprennent des informations sur les mouvements vitaux des éléments corporels causés par les fonctions vitales et/ou
b) la détermination de la position d'un deuxième élément corporel soumis à un mouvement vital s'opère à partir de la position de processus actuelle de la région de processus actuelle et via la position relative du premier élément corporel soumis à un mouvement vital par rapport au deuxième élément corporel soumis à un mouvement vital, la position relative étant déterminée en fonction d'un paramètre vital actuel.

2. Méthode de détermination selon la revendication 1, lors de laquelle une zone de détermination qui représente un détail de l'image d'analyse de processus est déterminée à partir des données de mouvement ou décrite par ces dernières, la détermination de la région de processus (40) étant limitée à la région de détermination et/ou des régions candidates situées en-dehors de la région de détermination étant exclues de la détermination en tant que région de processus.

3. Méthode de détermination selon la revendication 2, lors de laquelle les données de mouvement comprennent des données de définition de sous-image (x1, x2, y1, y2) qui définissent une sous-image de processus (30) en tant que zone de détermination de telle manière qu'elle correspond à une pré-sous-image (60) de la pré-image d'analyse (100), la position et la taille de la pré-sous-image peuvent être modifiées par une utilisateur de manière interactive.

4. Méthode de détermination selon l'une quelconque des revendications précédentes, lors de laquelle la pré-image d'analyse comprend une première (51) et une deuxième (55) pré-région, dans lesquelles sont respectivement représentées un premier (11') et un deuxième (15) des éléments corporels soumis à un mouvement vital et qui se situent respectivement dans une première et une deuxième pré-position, une première région de processus (41) qui correspond à la première pré-région (51) et occupe une première position de processus étant déterminée dans l'image d'analyse de processus à partir de la première pré-région (51),
où une position relative (R ; C) entre la première pré-position et la deuxième pré-position et/ou entre la première pré-position et la première position de processus est déterminée à partir de la première pré-position, la deuxième pré-position et la première position de processus,
où a) une deuxième position de processus d'une deuxième région de processus (45) correspondant à la deuxième pré-région (55) est déterminée à partir des données de mouvement et d'une hypothèse ; ou
b) la zone de détermination (35) pour déterminer la deuxième région de processus (45) est déterminée à partir des données de mouvement et d'une hypothèse, où l'hypothèse est que
i) la position relative (R) entre la première (51) et la deuxième (55) pré-région est égale à la position relative entre la première et la deuxième (45) région de processus et/ou
ii) la position relative (C) entre la première pré-région (51) et la première région de processus (41) est égale à la position relative (C) entre la deuxième pré-région (55) et la deuxième région de processus (45) ; et/ou
c) la zone de détermination (35) pour la détermination de la deuxième région de processus (45) est déterminée à partir des données de mouvement et des hypothèses i) ou ii) et des régions candidates situées en dehors de la zone de détermination sont exclues de la détermination en tant que deuxième région de processus.

5. Méthode de détermination selon l'une quelconque des revendications précédentes, lors de laquelle les données de mouvement comprennent des données de séquence ou bien lors de laquelle les données de mouvement complètent les pré-données d'image d'analyse par des données de séquence, les données de séquence décrivant une suite de pré-régions (52, 53, 54) reflétant le mouvement vital de l'élément corporel dans une suite de pré-images d'analyse (102, 103, 104), et lors de laquelle une zone de détermination représentant un détail de l'image d'analyse de processus est déterminée à partir des données de séquence.

6. Méthode de détermination selon la revendication 5, lors de laquelle une position de processus supposée d'une région de processus supposée est déterminée à partir de l'hypothèse selon laquelle une région de processus (42, 43, 44) qui représente un élément corporel déterminé soumis à un mouvement vital passe d'image d'analyse en image d'analyse par une suite de différentes positions de processus corrélée avec la suite des pré-positions des pré-régions (52, 53, 54) représentant l'élément corporel déterminé soumis à un mouvement vital et à partir d'une position de processus déterminée auparavant et lors de laquelle la zone de détermination (34) pour la détermination d'une position de processus actuelle (44) est déterminée de telle manière qu'elle comprends la région de processus supposée.

7. Méthode de détermination selon l'une quelconque des revendications précédentes dans la mesure où elles dépendent de la revendication 2, lors de laquelle sont saisies des données de fonctions vitales qui décrivent au moins un paramètre vital donné lors de la création de l'image d'analyse de processus actuelle,
où
une position supposée de l'image de région de processus est déterminée dans l'image d'analyse de processus actuelle à partir de l'au moins un paramètre vital donné,
et i) la zone de détermination pour déterminer la région de processus est déterminée à partir de la position supposée dans l'image d'analyse de processus actuel et/ou ii) des candidats pour la région de processus actuelle qui ne correspondent pas à la supposition sont exclus.

8. Méthode de détermination selon l'une quelconque des revendications précédentes, lors de laquelle sont saisies des données de fonctions vitales qui décrivent au moins un paramètre vital donné lors de la création de l'image d'analyse de processus actuelle, où les données de position relative sont fournies en fonction de
i) au moins un paramètre vital et/ou
ii) la position de processus
et la position relative entre le premier et le deuxième élément corporel est déterminée pour
i) le paramètre vital donné et/ou
ii) la position de processus donnée,
où la position du deuxième élément corporel soumis à un mouvement vital est déterminée à partir de la position relative déterminée.

9. Méthode de détermination selon l'une quelconque des revendications précédentes, lors de laquelle une position de processus supposée des régions de processus à déterminer actuellement est déterminée à partir des positions de processus de régions de processus déjà déterminées qui représentent la même partie corporelle soumise à un mouvement vital en supposant un mouvement constant de la partie corporelle soumise à un mouvement vital.

10. Méthode de détermination selon l'une quelconque des revendications précédentes, lors de laquelle plusieurs régions de processus précédentes (40a, 40b, 40c, 40d, 41a, 41b, 41c, 41d) ont été déterminées respectivement dans des images d'analyse de processus (20a, 21a) précédentes qui représentent chacune un autre élément corporel soumis à un mouvement vital et dans laquelle lors de la détermination des régions de processus actuelles qui représentent les mêmes éléments corporels soumis à un mouvement vital que les régions de processus précédentes, les régions de processus actuelles qui impliquent une direction de mouvement (P) des éléments corporels soumis à un mouvement vital divergeant de la majorité (N) sont exclues de la détermination des positions de processus.

11. Méthode de détermination selon l'une quelconque des revendications précédentes, lors de laquelle a) les données d'image d'analyse de processus comprennent la description de deux images d'analyse de processus obtenues au même moment mais à partir de deux directions de prise de vue différentes, et où la position de processus obtenue à partir de l'une des deux images d'analyse de processus est utilisée pour déterminer la région de processus dans l'autre des deux images d'analyse de processus à partir de données de prise de vue qui comprennent au moins des informations sur les différentes directions de prise de vue ou pour vérifier une détermination de la région de processus dans l'autre des deux images d'analyse de processus et/ou
b) la différence entre l'image d'analyse de processus actuelle et au moins une image d'analyse de processus précédente est déterminée pour la détermination de la région de processus, où la zone de détermination est déterminée à partir de la différence.

12. Méthode de détermination selon l'une quelconque des revendications précédentes, lors de laquelle est choisie parmi plusieurs pré-régions mises à disposition une partie sur laquelle doit être fondée la détermination des régions de processus, où le choix repose sur une propriété d'image des pré-régions telle que le contraste, la gamme dynamique, la compressibilité ou l'énergie de l'image, la compressibilité étant décrite par la quantité de données obtenu après une compression sans perte.

13. Méthode selon l'une quelconque des revendications précédentes, lors de laquelle des données de contrôle pour la détermination de la position du rayon de traitement par rapport au corps anatomique sont déterminées à partir des positions de processus déterminées,
de la position connue du corps anatomique par rapport au rayon de traitement et de la position connue de la géométrie d'imagerie des rayons d'analyse par rapport au rayon de traitement,
où le contour actuel (17') d'un élément corporel fermé soumis à un mouvement vital est déterminé à partir des régions de processus et les données de contrôle comprennent des données de contour qui décrivent ce contour.

14. Programme qui, lorsqu'il est chargé sur un ordinateur ou exécuté sur un ordinateur, ordonne à l'ordinateur de mettre en oeuvre la méthode selon l'une quelconque des revendications précédentes.

15. Mémoire de programme dans laquelle le programme selon la revendication 14 est enregistré » ou onde de signal portant des informations représentant le programme selon la revendication 14.

16. Système de rayon de traitement avec
un appareil de traitement (200), configuré pour émettre un rayon de traitement (220) et qui comprend un appareil de contrôle (230) pour contrôler la position du rayon de traitement (220),
avec un dispositif de traitement de données qui comporte une ordinateur (400) sur lequel est chargé ou exécuté le programme selon la revendication 14, des interfaces de données, une interface utilisateur et un écran (420),
avec un appareil d'analyse (300, 320) pour générer les données de pré-image d'analyse et les données d'image d'analyse de processus envoyées à l'ordinateur via les interfaces de données,
où l'interface utilisateur est configurée de telle manière qu'elle permet la désignation par un utilisateur des pré-régions et des données de mouvement ou de données à partir desquelles les données de mouvement sont déterminables.
